# EUROPEAN PATENT SPECIFICATION

(11) **EP 4 535 847 B1**
(45) Date of publication and mention of the grant of the patent: **02.12.2026**
(21) Application number: 23826053.3
(22) Date of filing: 23.05.2023
(51) Int. Cl.: H04W 16/10, H04W 12/75, H04W 48/18, H04W 76/11, H04W 28/16, H04W 76/15, H04W 88/14

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 21.06.2022 CN 202210707373
(43) Date of publication of application: 09.04.2025
(73) Proprietor: Huawei Technologies Co., Ltd., Shenzhen, Guangdong 518129 (CN)
(72) Inventor: XING, Weijun, Shenzhen, Guangdong 518129 (CN); WU, Shaoyun, Shenzhen, Guangdong 518129 (CN)
(74) Representative: Gill Jennings & Every LLP
(86) International application number: PCT/CN2023/095767
(87) International publication number: WO 2023/246404

(56) References cited:
- EP-A1- 3 975 624
- WO-A1-2022/089725
- CN-A- 102 396 286
- CN-A- 107 295 561
- CN-A- 113 891 427
- KR-A- 20050 092 585
- KR-A- 20060 096 524
- US-A1- 2005 207 368
- 3GPP SA WG2: "3rd Generation Partnership Project; Technical Specification Group Services and System Aspects; Study on Architecture for Next Generation System (Release 14)", 3GPP TR 23.799, 31 October 2016 (2016-10-31), pages 1 - 104, XP055447599, Retrieved from the Internet <URL:https://www.3gpp.org/ftp//Specs/archive/23_series/23.799/23799-110.zip> [retrieved on 20180205]

## Description

### TECHNICAL FIELD

Embodiments of this application relate to the field of communication technologies, and in particular, to a communication method and apparatus.

### BACKGROUND

In a wireless communication network, to meet different communication requirements, a network may be divided into subnets that provide different service functions. For example, in a 5G network, the network is divided into a plurality of network slices. Different network slices may provide connection services for different services, and a terminal device may access a corresponding network slice as required.

Currently, in the 5G network, one access and mobility management function network element manages all network slices, and the terminal device needs to registers with a network in the access and mobility management function network element. The access and mobility management function network element configures a same temporary identity for the terminal device in all the network slices, and the terminal device may communicate with different network slices by using the temporary identity. Due to such a design, network slices cannot be independent of each other, resulting in reduction of network flexibility; and the terminal device cannot use different security mechanisms in the different network slices, resulting in poor network security.

PP SA WG2, 3rd Generation Partnership Project; Technical Specification Group Services and System Aspects; Study on Architecture for Next Generation System (Release 14), 3GPP TR 23.799, 31 October 2016, pp. 1-104, relates to a 3GPP study examining architectural principles and design options for future mobile communication systems. EP3975624A1 relates to the field of wireless communications technologies, and in particular, to a network slice selection method

### SUMMARY

Embodiments of this application provide a communication method and apparatus, to improve network flexibility and security.

According to a first aspect, an embodiment of this application provides a communication method. The method includes: A terminal device sends a first request message, where the first request message is used to request to serve the terminal device in N1 subnets of a core network, the first request message includes configuration information of each of the N1 subnets, and N1 is a positive integer greater than 1; and the terminal device obtains a first response message, where the first response message indicates that the terminal device is served in N2 subnets, the N2 subnets include some or all of the N1 subnets, N2 is a positive integer less than or equal to N1, and the first response message includes a plurality of first temporary identifiers of the terminal device, each first temporary identifier of the plurality of first temporary identifiers being associated with different subnets of each of the N2 subnets.

In the foregoing design, the terminal device may request services of a plurality of subnets, and an independent temporary identifier is configured for the terminal device in each of the subnets, to implement mapping between an identifier of the terminal device and a network function and isolation between different network services; and an access and mobility management network element does not need to manage all network functions accessed by the terminal device in a unified manner, so that a network function service procedure can be simplified, thereby improving network flexibility and security.

In a possible design, the first response message includes identifiers of the N2 subnets.

In a possible design, configuration information of a j^{th} subnet in the N1 subnets includes one or more of the following: a service type of the j^{th} subnet, an identifier of the j^{th} subnet, an address of the j^{th} subnet, an address of a network element that provides a service for the terminal device in the j^{th} subnet, and a second temporary identifier of the terminal device in the j^{th} subnet, where j is a positive integer from 1 to N1.

In a possible design, if the N1 subnets and the N2 subnets each include a first subnet, a first temporary identifier of the terminal device in the first subnet is the same as a second temporary identifier of the terminal device in the first subnet.

In a possible design, the method further includes: The terminal device obtains first mapping configuration information, where the first mapping configuration information indicates a mapping relationship between N2 first temporary identifiers and N2 air interface resources; and the terminal device sends information related to an i^{th} subnet in the N2 subnets to an access network device on an air interface resource corresponding to an i^{th} first temporary identifier in the N2 first temporary identifiers, where i is a positive integer from 1 to N2. In such a design, the access network device can distinguish, based on the air interface resources, between information transmission corresponding to the subnets, so that decision-making and forwarding can be quickly performed, thereby improving communication performance; and identifiers of the terminal device in the subnets do not need to be transparent, thereby improving communication security.

In a possible design, the method further includes: The terminal device obtains configuration information of each air interface resource in the N2 air interface resources, where the configuration information of the air interface resource includes one or more of the following: quality of service information, bandwidth information, scheduling priority information, a time-frequency resource, antenna port information, or polarization information. Such a design supports flexible adjustment of configuration information of different air interface resources, to adapt to an actual communication environment.

In a possible design, the method further includes: The terminal device obtains second mapping configuration information, where the second mapping configuration information indicates a mapping relationship between N2 first temporary identifiers and N2 third temporary identifiers of the terminal device in an access network device; and the terminal device sends information related to an i^{th} subnet in the N2 subnets to the access network device by using an i^{th} third temporary identifier in the N2 third temporary identifiers, where i is a positive integer from 1 to N2. In such a design, the temporary identifiers of the terminal device in the access network device and those of the terminal device in the subnets are associated, so that the access network device can distinguish, by using the temporary identifiers of the terminal device in the access network device, between information transmission corresponding to the subnets, so that decision-making and forwarding can be quickly performed, thereby improving communication performance; and identifiers of the terminal device in the subnets do not need to be transparent, thereby improving communication security.

In a possible design, the method further includes: The terminal device obtains first information, where the first information indicates access configuration information allocated to the terminal device in some or all of the N2 subnets.

In a possible design, first temporary identifiers of the terminal device in at least two of the N2 subnets are different.

According to a second aspect, an embodiment of this application provides a communication method. The method includes the following steps.

An access network device obtains a first request message from a terminal device, where the first request message is used to request to serve the terminal device in N1 subnets of a core network, the first request message includes configuration information of each of the N1 subnets, and N1 is a positive integer greater than 1; and the access network device sends a second request message to a first core network element based on the first request message, where the second request message is used to request to serve the terminal device in the N1 subnets of the core network, and the second request message includes the configuration information of each of the N1 subnets.

An access network device obtains a second response message, where the second response message indicates that the terminal device is served in N2 subnets, the N2 subnets include some or all of the N1 subnets, N2 is a positive integer less than or equal to N1, and the second response message includes a plurality of first temporary identifiers of the terminal device, each first temporary identifier of the plurality of first temporary identifiers being associated with different subnets ofof the N2 subnets; and the access network device sends a first response message to the terminal device based on the second response message, where the first response message indicates that the terminal device is served in the N2 subnets, and the first response message includes the first temporary identifier of the terminal device in each of the N2 subnets.

In the foregoing design, the access network device may request a plurality of subnets to provide a service for the terminal device, and configure an independent temporary identifier for the terminal device in each of the subnets, to implement mapping between an identifier of the terminal device and a network function and isolation between different network services; and an access and mobility management network element does not need to perform unified management on all network functions accessed by the terminal device, so that a network function service procedure can be simplified, thereby improving network flexibility and security.

In a possible design, configuration information of a j^{th} subnet in the N1 subnets includes one or more of the following: a service type of the j^{th} subnet, an identifier of the j^{th} subnet, an address of the j^{th} subnet, an address of a network element that provides a service for the terminal device in the j^{th} subnet, and a second temporary identifier of the terminal device in the j^{th} subnet, where j is a positive integer from 1 to N1.

In a possible design, the second request message further includes configuration information of the access network device, and the configuration information of the access network device includes one or more of the following: an identifier of the access network device, port information of the access network device, and a temporary identifier of the terminal device in the access network device.

In a possible design, before the access network device obtains the second response message, the method further includes: The access network device obtains second information from the first core network element, where the second information indicates that the terminal device is allowed to be served in the N2 subnets of the core network, the second information includes configuration information of the N2 subnets, the N2 subnets include some or all of the N1 subnets, and N2 is a positive integer; and the access network device requests, based on the configuration information of an i^{th} subnet in the N2 subnets, a second core network element associated with the i^{th} subnet to serve the terminal device in the i^{th} subnet. In such a design, authentication is performed on the terminal device before a service of the subnet is requested, so that security can be improved, and a resource waste caused by termination due to an authentication failure in a service process can be reduced.

In a possible design, the method further includes: The access network device obtains, by using a specified air interface resource, information that is related to a second subnet and that is sent by the terminal device, where the second subnet is a subnet with which the terminal device already registers; and the access network device sends, through a first communication link corresponding to the specified air interface resource, the information related to the second subnet to a second core network element associated with the second subnet, where the access network device stores a mapping relationship between a plurality of air interface resources and a plurality of first communication links. In such a design, the access network device can distinguish, based on the air interface resources, between information transmission corresponding to the subnets, so that decision-making and forwarding can be quickly performed, thereby improving communication performance; and identifiers of the terminal device in the subnets do not need to be transparent, thereby improving communication security.

In a possible design, the method further includes: The access network device obtains configuration information of each air interface resource in the plurality of air interface resources from the core network, where the configuration information of the air interface resource includes one or more of the following: quality of service information, bandwidth information, scheduling priority information, a time-frequency resource, antenna port information, or polarization information. Such a design supports flexible adjustment of configuration information of different air interface resources, to adapt to an actual communication environment.

In a possible design, the method further includes: The access network device obtains information that is related to a second subnet and that is sent by the terminal device, where the information includes a first temporary identifier of the terminal device in the second subnet, and the second subnet is a subnet with which the terminal device already registers; and the access network device sends, by using a third temporary identifier corresponding to the first temporary identifier, the information related to the second subnet to a second core network element associated with the second subnet, where the third temporary identifier is a temporary identifier of the terminal device in the access network device, and the access network device stores a mapping relationship between the third temporary identifier and the first temporary identifier. In such a design, the temporary identifiers of the terminal device in the access network device and those of the terminal device in the subnets are associated, so that the access network device can distinguish, by using the temporary identifiers of the terminal device in the access network device, between information transmission corresponding to the subnets, so that decision-making and forwarding can be quickly performed, thereby improving communication performance; and identifiers of the terminal device in the subnets do not need to be transparent, thereby improving communication security.

According to a first example, this application also describes a communication method. The method includes: A first core network element obtains a second request message, where the second request message is used to request to serve a terminal device in N1 subnets of a core network, the second request message includes configuration information of each of the N1 subnets, and N1 is a positive integer; the first core network element determines a second response message, where the second response message indicates that the terminal device is served in N2 subnets, the N2 subnets include some or all of the N1 subnets, N2 is a positive integer less than or equal to N1, and the second response message includes a first temporary identifier of the terminal device in each of the N2 subnets; and the first core network element sends the second response message.

In the foregoing design, an independent temporary identifier is configured for the terminal device in each of the subnets of the core network, to implement mapping between an identifier of the terminal device and a network function and isolation between different network services; and an access and mobility management network element does not need to perform unified management on all network functions accessed by the terminal device, so that a network function service procedure can be simplified, thereby improving network flexibility and security.

In a possible design, before the first core network element determines the second response message, the method further includes: The first core network element requests, based on the second request message, a second core network element associated with an i^{th} subnet in the N2 subnets to serve the terminal device in the i^{th} subnet, where the N2 subnets include some or all of the N1 subnets, N2 is a positive integer, and i is a positive integer from 1 to N2.

In a possible design, before the first core network element requests the second core network element associated with the i^{th} subnet in the N2 subnets to serve the terminal device in the i^{th} subnet, the method further includes: The first core network element obtains second information, where the second information indicates that the terminal device is allowed to be served in the N2 subnets. In such a design, authentication is performed on the terminal device before a service of the subnet is requested, so that security can be improved, and a resource waste caused by termination due to an authentication failure in a service process can be reduced.

In a possible design, that the first core network element determines a second response message includes: The first core network element obtains the second response message from second core network elements associated with the N2 subnets.

In a possible design, the method further includes: The first core network element obtains, by using a specified first communication link, information that is related to a second subnet and that is sent by an access network device, where the second subnet is a subnet with which the terminal device already registers; and the first core network element sends, by using a second communication link corresponding to the specified first communication link, the information related to the second subnet to a second core network element associated with the second subnet, where the access network device stores a mapping relationship between the specified first communication link and the second communication link. In such a design, core network elements can distinguish, based on communication links, between information transmission corresponding to the subnets, so that decision-making and forwarding can be quickly performed, thereby improving communication performance; and identifiers of the terminal device in the subnets do not need to be transparent, thereby improving communication security.

In a possible design, the method further includes: The first core network element obtains information that is related to a second subnet and that is sent by an access network device, where the information includes a third temporary identifier of the terminal device in the access network device, and the second subnet is a subnet with which the terminal device already registers; and the first core network element sends, by using a fourth temporary identifier corresponding to the third temporary identifier, the information related to the second subnet to the second core network element associated with the second subnet, where the fourth temporary identifier is a temporary identifier of the terminal device in the first core network element, and the access network device stores a mapping relationship between the fourth temporary identifier and the third temporary identifier. In such a design, core network elements can distinguish, based on temporary identifiers respectively configured by the core network elements for the terminal device, between information transmission corresponding to the subnets, so that decision-making and forwarding can be quickly performed, thereby improving communication performance; and identifiers of the terminal device in the subnets do not need to be transparent, thereby improving communication security.

In a possible design, the method further includes: The first core network element sends first information, where the first information indicates access configuration information allocated to the terminal device in some or all of the N2 subnets.

In a possible design, the method further includes: The first core network element indicates configuration information of each air interface resource in a plurality of air interface resources to an access network device, where the configuration information of the air interface resource includes one or more of the following: quality of service information, bandwidth information, scheduling priority information, a time-frequency resource, antenna port information, or polarization information.

In a possible design, the first core network element is configured to provide the terminal device with one or more of the following services: an access management service, a mobility management service, an authentication service, and a connection service.

According to a third aspect, an embodiment of this application provides a communication apparatus. The communication apparatus may be a terminal device, an apparatus in the terminal device, or an apparatus that can be used in matching with the terminal device. In a design, the communication apparatus may include modules that are in one-to-one correspondence with the method/operations/steps/actions described in the first aspect. The module may be implemented by a hardware circuit, software, or a combination of the hardware circuit and the software. In a design, the communication apparatus may include a processing module and a communication module.

An example is as follows:
The processing module is configured to send a first request message by using a communication module, where the first request message is used to request to serve the terminal device in N1 subnets of a core network, the first request message includes configuration information of each of the N1 subnets, and N1 is a positive integer greater than 1.

The communication module is further configured to obtain a first response message, where the first response message indicates that the terminal device is served in N2 subnets, the N2 subnets include some or all of the N1 subnets, N2 is a positive integer less than or equal to N1, and the first response message includes a first temporary identifier of the terminal device in each of the N2 subnets.

In the foregoing design, the terminal device may request services of a plurality of subnets, and an independent temporary identifier is configured for the terminal device in each of the subnets, to implement mapping between an identifier of the terminal device and a network function and isolation between different network services; and an access and mobility management network element does not need to manage all network functions accessed by the terminal device in a unified manner, so that a network function service procedure can be simplified, thereby improving network flexibility and security.

In a possible design, the first response message includes identifiers of the N2 subnets.

In a possible design, configuration information of a j^{th} subnet in the N1 subnets includes one or more of the following: a service type of the j^{th} subnet, an identifier of the j^{th} subnet, an address of the j^{th} subnet, an address of a network element that provides a service for the terminal device in the j^{th} subnet, and a second temporary identifier of the terminal device in the j^{th} subnet, where j is a positive integer from 1 to N1.

In a possible design, if the N1 subnets and the N2 subnets each include a first subnet, a first temporary identifier of the terminal device in the first subnet is the same as a second temporary identifier of the terminal device in the first subnet.

In a possible design, the communication module is further configured to obtain first mapping configuration information, where the first mapping configuration information indicates a mapping relationship between N2 first temporary identifiers and N2 air interface resources; and the processing module is further configured to send information related to an i^{th} subnet in the N2 subnets to an access network device by using the communication module on an air interface resource corresponding to an i^{th} first temporary identifier in the N2 first temporary identifiers, where i is a positive integer from 1 to N2.

In a possible design, the communication module is further configured to obtain configuration information of each air interface resource in the N2 air interface resources, where the configuration information of the air interface resource includes one or more of the following: quality of service information, bandwidth information, scheduling priority information, a time-frequency resource, antenna port information, or polarization information.

In a possible design, the communication module is further configured to obtain second mapping configuration information, where the second mapping configuration information indicates a mapping relationship between N2 first temporary identifiers and N2 third temporary identifiers of the terminal device in an access network device; and the processing module is further configured to send information related to an i^{th} subnet in the N2 subnets to the access network device by using an i^{th} third temporary identifier in the N2 third temporary identifiers and by using the communication module, where i is a positive integer from 1 to N2.

In a possible design, the communication module is further configured to obtain first information, where the first information indicates access configuration information allocated to the terminal device in some or all of the N2 subnets.

In a possible design, first temporary identifiers of the terminal device in at least two of the N2 subnets are different.

According to a fourth aspect, an embodiment of this application provides a communication apparatus. The communication apparatus may be an access network device, an apparatus in the access network device, or an apparatus that can be used in matching with the access network device. In a design, the communication apparatus may include modules that are in one-to-one correspondence with the method/operations/steps/actions described in the second aspect. The module may be implemented by a hardware circuit, software, or a combination of the hardware circuit and software. In a design, the communication apparatus may include a processing module and a communication module.

An example is as follows:
The communication module is configured to obtain a first request message from a terminal device, where the first request message is used to request to serve the terminal device in N1 subnets of a core network, the first request message includes configuration information of each of the N1 subnets, and N1 is a positive integer greater than 1; and the processing module is configured to send a second request message to a first core network element based on the first request message by using the communication module, where the second request message is used to request to serve the terminal device in the N1 subnets of the core network, and the second request message includes the configuration information of each of the N1 subnets.

The communication module is further configured to obtain a second response message, where the second response message indicates that the terminal device is served in N2 subnets, the N2 subnets include some or all of the N1 subnets, N2 is a positive integer less than or equal to N1, and the second response message includes a first temporary identifier of the terminal device in each of the N2 subnets; and the processing module is further configured to send a first response message to the terminal device based on the second response message by using the communication module, where the first response message indicates that the terminal device is served in the N2 subnets, and the first response message includes the first temporary identifier of the terminal device in each of the N2 subnets.

In the foregoing design, the access network device may request a plurality of subnets to provide a service for the terminal device, and configure an independent temporary identifier for the terminal device in each of the subnets, to implement mapping between an identifier of the terminal device and a network function and isolation between different network services; and an access and mobility management network element does not need to perform unified management on all network functions accessed by the terminal device, so that a network function service procedure can be simplified, thereby improving network flexibility and security.

In a possible design, configuration information of a j^{th} subnet in the N1 subnets includes one or more of the following: a service type of the j^{th} subnet, an identifier of the j^{th} subnet, an address of the j^{th} subnet, an address of a network element that provides a service for the terminal device in the j^{th} subnet, and a second temporary identifier of the terminal device in the j^{th} subnet, where j is a positive integer from 1 to N1.

In a possible design, the second request message further includes configuration information of the access network device, and the configuration information of the access network device includes one or more of the following: an identifier of the access network device, port information of the access network device, and a temporary identifier of the terminal device in the access network device.

In a possible design, the communication module is further configured to obtain second information from the first core network element before obtaining the second response message, where the second information indicates that the terminal device is allowed to be served in the N2 subnets of the core network, the second information includes configuration information of the N2 subnets, the N2 subnets include some or all of the N1 subnets, and N2 is a positive integer; and the processing module is further configured to request, by using the communication module based on the configuration information of an i^{th} subnet in the N2 subnets, a second core network element associated with the i^{th} subnet to serve the terminal device in the i^{th} subnet.

In a possible design, the communication module is further configured to obtain, by using a specified air interface resource, information that is related to a second subnet and that is sent by the terminal device, where the second subnet is a subnet with which the terminal device already registers; and the communication module is further configured to send, through a first communication link corresponding to the specified air interface resource, the information related to the second subnet to a second core network element associated with the second subnet, where the access network device stores a mapping relationship between a plurality of air interface resources and a plurality of first communication links.

In a possible design, the communication module is further configured to obtain, in the core network, configuration information of each air interface resource in the plurality of air interface resources, where the configuration information of the air interface resource includes one or more of the following: quality of service information, bandwidth information, scheduling priority information, a time-frequency resource, antenna port information, or polarization information.

In a possible design, the communication module is further configured to obtain information that is related to a second subnet and that is sent by the terminal device, where the information includes a first temporary identifier of the terminal device in the second subnet, and the second subnet is a subnet with which the terminal device already registers; and the processing module is further configured to send, by using the communication module by using a third temporary identifier corresponding to the first temporary identifier, the information related to the second subnet to a second core network element associated with the second subnet, where the third temporary identifier is a temporary identifier of the terminal device in the access network device, and the access network device stores a mapping relationship between the third temporary identifier and the first temporary identifier.

According to a second example, this application also describes a communication apparatus. The communication apparatus may be a first core network element, may be an apparatus in the first core network element, or may be an apparatus that can be used in matching with the first core network element. In a design, the communication apparatus may include modules that are in one-to-one correspondence with the method/operations/steps/actions described in the first example. The module may be implemented by a hardware circuit, software, or a combination of the hardware circuit and software. In a design, the communication apparatus may include a processing module and a communication module.

An example is as follows:
The communication module is configured to obtain a second request message, where the second request message is used to request to serve a terminal device in N1 subnets of a core network, the second request message includes configuration information of each of the N1 subnets, and N1 is a positive integer; the processing module is configured to determine a second response message, where the second response message indicates that the terminal device is served in N2 subnets, the N2 subnets include some or all of the N1 subnets, N2 is a positive integer less than or equal to N1, and the second response message includes a first temporary identifier of the terminal device in each of the N2 subnets; and the communication module is further configured to send the second response message.

In the foregoing design, an independent temporary identifier is configured for the terminal device in each of the subnets of the core network, to implement mapping between an identifier of the terminal device and a network function and isolation between different network services; and an access and mobility management network element does not need to perform unified management on all network functions accessed by the terminal device, so that a network function service procedure can be simplified, thereby improving network flexibility and security.

In a possible design, the processing module is further configured to: before determining the second response message, request, based on the second request message by using the communication module, a second core network element associated with an i^{th} subnet in the N2 subnets to serve the terminal device in the i^{th} subnet, where the N2 subnets include some or all of the N1 subnets, N2 is a positive integer, and i is a positive integer from 1 to N2.

In a possible design, before the processing module requests the second core network element associated with the i^{th} subnet in the N2 subnets to serve the terminal device in the i^{th} subnet, the communication module is further configured to obtain second information, where the second information indicates that the terminal device is allowed to be served in the N2 subnets.

In a possible design, the processing module is further configured to obtain, by using the communication module, the second response message from second core network elements associated with the N2 subnets.

In a possible design, the communication module is further configured to obtain, by using a specified first communication link, information that is related to a second subnet and that is sent by an access network device, where the second subnet is a subnet with which the terminal device already registers; and the communication module is further configured to send, by using a second communication link corresponding to the specified first communication link, the information related to the second subnet to a second core network element associated with the second subnet, where the access network device stores a mapping relationship between the specified first communication link and the second communication link.

In a possible design, the communication module is further configured to obtain information that is related to a second subnet and that is sent by an access network device, where the information includes a third temporary identifier of the terminal device in the access network device, and the second subnet is a subnet with which the terminal device already registers; and the processing module is further configured to send, by using the communication module by using a fourth temporary identifier corresponding to the third temporary identifier, the information related to the second subnet to a second core network element associated with the second subnet, where the fourth temporary identifier is a temporary identifier of the terminal device in the first core network element, and the access network device stores a mapping relationship between the fourth temporary identifier and the third temporary identifier.

In a possible design, the communication module is further configured to send first information, where the first information indicates access configuration information allocated to the terminal device in some or all of the N2 subnets.

In a possible design, the processing module is further configured to indicate configuration information of each air interface resource in a plurality of air interface resources to an access network device by using the communication module, where the configuration information of the air interface resource includes one or more of the following: quality of service information, bandwidth information, scheduling priority information, a time-frequency resource, antenna port information, or polarization information.

In a possible design, the first core network element is configured to provide the terminal device with one or more of the following services: an access management service, a mobility management service, an authentication service, and a connection service.

According to a third example, this application also describes a communication apparatus. The communication apparatus includes a processor, configured to implement the method described in the first aspect. The processor is coupled to a memory, the memory is configured to store computer program instructions and data, and when executing the instructions stored in the memory, the processor may implement the method described in the first aspect. Optionally, the communication apparatus may further include the memory. The communication apparatus may further include a communication interface. The communication interface is used by the apparatus to communicate with another device. For example, the communication interface may be a transceiver, a circuit, a bus, a module, a pin, or another type of communication interface.

In a possible design, the communication apparatus includes:
the memory, configured to store computer program instructions;
the processor, configured to send a first request message through the communication interface, where the first request message is used to request to serve a terminal device in N1 subnets of a core network, the first request message includes configuration information of each of the N1 subnets, and N1 is a positive integer greater than 1; and
the communication interface, configured to obtain a first response message, where the first response message indicates that the terminal device is served in N2 subnets, the N2 subnets include some or all of the N1 subnets, N2 is a positive integer less than or equal to N1, and the first response message includes a first temporary identifier of the terminal device in each of the N2 subnets.

According to a fourth example, this application also describes a communication apparatus. The communication apparatus includes a processor, configured to implement the method described in the second aspect. The processor is coupled to a memory, the memory is configured to store computer program instructions and data, and when executing the instructions stored in the memory, the processor may implement the method described in the second aspect. Optionally, the communication apparatus may further include the memory. The communication apparatus may further include a communication interface. The communication interface is used by the apparatus to communicate with another device. For example, the communication interface may be a transceiver, a circuit, a bus, a module, a pin, or another type of communication interface.

In a possible design, the communication apparatus includes:
the memory, configured to store computer program instructions; and
the communication interface, configured to obtain a first request message from a terminal device, where the first request message is used to request to serve the terminal device in N1 subnets of a core network, the first request message includes configuration information of each of the N1 subnets, and N1 is a positive integer greater than 1; and the processor, configured to send a second request message to a first core network element based on the first request message through the communication interface, where the second request message is used to request to serve the terminal device in the N1 subnets of the core network, and the second request message includes configuration information of each of the N1 subnets.

The communication interface is further configured to obtain a second response message, where the second response message indicates that the terminal device is served in N2 subnets, the N2 subnets include some or all of the N1 subnets, N2 is a positive integer less than or equal to N1, and the second response message includes a first temporary identifier of the terminal device in each of the N2 subnets; and the processor is further configured to send a first response message to the terminal device based on the second response message through the communication interface, where the first response message indicates that the terminal device is served in the N2 subnets, and the first response message includes the first temporary identifier of the terminal device in each of the N2 subnets.

According to a fifth example, an embodiment of this application provides a communication apparatus. The communication apparatus includes a processor, configured to implement the method described in the first example. The processor is coupled to a memory, the memory is configured to store computer program instructions and data, and when executing the instructions stored in the memory, the processor may implement the method described in the second aspect. Optionally, the communication apparatus may further include the memory. The communication apparatus may further include a communication interface. The communication interface is used by the apparatus to communicate with another device. For example, the communication interface may be a transceiver, a circuit, a bus, a module, a pin, or another type of communication interface.

In a possible design, the communication apparatus includes:
the memory, configured to store computer program instructions; and
the communication interface, configured to obtain a second request message, where the second request message is used to request to serve a terminal device in N1 subnets of a core network, the second request message includes configuration information of each of the N1 subnets, and N1 is a positive integer; and the processor, configured to determine a second response message, where the second response message indicates that the terminal device is served in N2 subnets, the N2 subnets include some or all of the N1 subnets, N2 is a positive integer less than or equal to N1, and the second response message includes a first temporary identifier of the terminal device in each of the N2 subnets; and the communication interface is further configured to send the second response message.

Also disclosed herein is an example of a communication system. The system includes the communication apparatus described in the fourth aspect or the fourth example, and the communication apparatus described in the second example or the fifth aspect. Further, optionally, the communication system may further include the communication apparatus described in the third aspect or the third example.

Also disclosed herein is an example of a computer program. When the computer program is run on a computer, the computer is enabled to perform the method according to any one of the first aspect, the second aspect or the first example.

According to a fifth aspect, an embodiment of this application further provides a computer program product. The computer program product includes instructions. When the instructions are run on a computer, the computer is enabled to perform the method according to any one of the first aspect, the second aspect or the first example.

Also disclosed herein is an example of a computer-readable storage medium. The computer-readable storage medium stores a computer program or instructions. When the computer program or the instructions are run on a computer, the computer is enabled to perform the method according to any one of the first aspect, the second aspect or the first example.

Also disclosed herein is an example of a chip. The chip is configured to read a computer program stored in a memory, to perform the method according to any one of the first aspect, the second aspect or the first example.

Also disclosed herein is an example of a chip system. The chip system includes a processor, configured to support a computer apparatus in implementing the method according to any one of the first aspect, the second aspect or the first example. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1 is a diagram of a structure of a communication system;
FIG. 2A to FIG. 2D are diagrams of several network architectures of a 5G network;
FIG. 3A to FIG. 3F are diagrams of several network architectures of a UCN;
FIG. 4 is one of schematic flowcharts of a communication method according to an embodiment of this application;
FIG. 5 is a diagram of a structure of a network protocol stack;
FIG. 6A to FIG. 6C are diagrams of structures of several communication paths according to an embodiment of this application;
FIG. 7 is one of schematic flowcharts of a communication method according to an embodiment of this application;
FIG. 8A to FIG. 8C are diagrams of structures of several communication paths according to an embodiment of this application;
FIG. 9 is one of diagrams of a structure of a communication apparatus according to an embodiment of this application; and
FIG. 10 is one of diagrams of a structure of a communication apparatus according to an embodiment of this application.

### DESCRIPTION OF EMBODIMENTS

To make objectives, technical solutions, and advantages of embodiments of this application clearer, the following further describes the embodiments of this application in detail with reference to the accompanying drawings.

At least one (item) in the embodiments of this application indicates one or more (items). A plurality of (items) indicates two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although terms such as "first" and "second" may be used in the embodiments of this application to describe objects, these objects should not be limited by these terms. These terms are merely used to distinguish the objects from each other.

The terms "include", "have", and any variants thereof in the following descriptions of the embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in the embodiments of this application, the term "in an example" or "for example" is used to represent giving an example, an illustration, or a description. Any method or design scheme described as an "example" or "for example" in the embodiments of this application should not be explained as being more preferred or having more advantages than another method or design scheme. To be precise, use of the word such as "example" or "for example" is intended to present a relative concept in a specific manner.

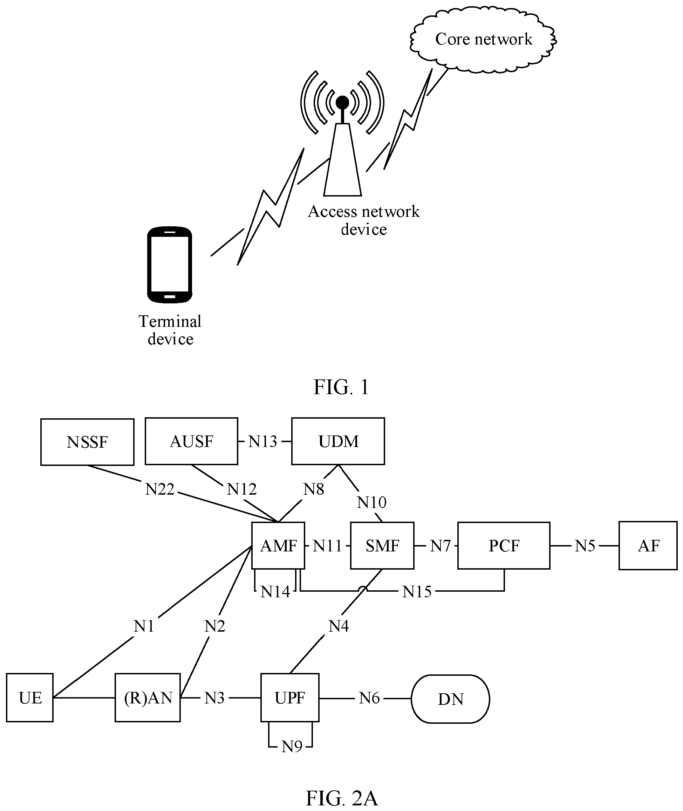

A technology provided in the embodiments of this application may be applied to a wireless communication network, for example, a fourth generation (4^{th} generation, 4G) mobile communication technology communication network (for example, long term evolution (long term evolution, LTE)), a fifth generation (5^{th} generation, 5G) mobile communication technology network, or a future network, for example, a 6G network. The wireless communication network mainly includes at least one terminal device, at least one access network device, and at least one core network. The core network includes a plurality of core network elements. For example, FIG. 1 shows a network architecture. The network architecture includes one terminal device, one access network device, and one core network. The terminal device may register with a core network, and the access network device may be connected to the core network (for example, an LTE core network or a 5G core network), to provide a radio access service for the terminal device. The access network device may send a downlink signal to the terminal device, and the terminal device may send an uplink signal to the access network device.

The following describes in detail the terminal device and the access network device in FIG. 1.

### (1) Access network device

The access network device may be a base station (base station, BS), and the access network device may also be referred to as a network device, an access node (access node, AN), or a radio access node (radio access node, RAN). The access network device may be referred to as (R)AN for short, and the (R)AN represents a RAN or an OG. The access network device may be connected to a core network (for example, an LTE core network or a 5G core network). The access network device may provide a radio access service for a terminal device, and communicate with the terminal device over an air interface by using one or more cells. The access network device includes, for example, but is not limited to, at least one of the following: an evolved universal terrestrial radio access network (evolved universal terrestrial radio access network, E-UTRAN) device in 4G, a next generation NodeB (generation NodeB, gNB) in 5G, a next generation radio access network (next generation radio access network, NG-RAN) device in 5G, an access network device or a module included in the access network device in an open radio access network (open radio access network, O-RAN), an evolved NodeB (evolved NodeB, eNB), a radio network controller (radio network controller, RNC), a NodeB (NodeB, NB), and a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmission reception point, TRP), a transmitting point (transmitting point, TP), and/or a mobile switching center. Alternatively, the access network device may be a radio unit (radio unit, RU), a central unit (central unit, CU), a distributed unit (distributed unit, DU), a central unit control plane (CU control plane, CU-CP) node, or a central unit user plane (CU user plane, CU-UP) node. Alternatively, the access network device may be a satellite, an uncrewed aerial vehicle base station, a relay station, an access point, a vehicle-mounted device, a wearable device, an access network device in a future evolved public land mobile network (public land mobile network, PLMN), or the like.

In the embodiments of this application, a communication apparatus configured to implement an access network device function may be an access network device, may be a network device having a part of the access network device function, or may be an apparatus that can support the access network device in implementing the function, for example, a chip system, a hardware circuit, a software module, or a combination of the hardware circuit and the software module, where the apparatus may be mounted in the access network device or used in matching with the access network device. In the method in the embodiments of this application, an example in which the communication apparatus configured to implement the access network device function is the access network device or a (R)AN is used for description.

### (2) Terminal device

The terminal device is also referred to as a terminal, user equipment (user equipment, UE), a mobile station (mobile station, MS), a mobile terminal (mobile terminal, MT), or the like. The terminal device may be a device that provides voice and/or data connectivity for a user. The terminal device may communicate with one or more core networks through an access network device. The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. Examples of some terminal devices are: a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a wireless network camera, a mobile phone (mobile phone), a tablet computer, a notebook computer, a palmtop computer, a mobile internet device (mobile internet device, MID), an uncrewed aerial vehicle, a wearable device such as a smartwatch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal such as a smart fueler in a smart city (smart city), a terminal device on a high-speed railway, and a wireless terminal, for example, a smart speaker, a smart coffee machine, or a smart printer, in a smart home (smart home).

In the embodiments of this application, a communication apparatus configured to implement a terminal device function may be a terminal device, may be a terminal device having a part of a terminal function, or may be an apparatus that can support the terminal device in implementing the function, for example, a chip system. The apparatus may be mounted in the terminal device or used in matching with the terminal device. In the embodiments of this application, the chip system may include a chip, or may include a chip and another discrete component. In the technical solutions provided in the embodiments of this application, an example in which the communication apparatus configured to implement the terminal device function is the terminal device or UE is used for description.

Core networks in different wireless communication networks are different. FIG. 2A shows an architecture of a 5G network. A core network in the architecture of the 5G network mainly includes the following core network elements: a network slice selection function (network slice selection function, NSSF) network element, a network exposure function (network exposure function, NEF) network element, a network repository function (network repository function, NRF) network element, a policy control function (policy control function, PCF) network element, a unified data management (unified data management, UDM) network element, an application function (application function, AF) network element, an authentication server function (authentication server function, AUSF) network element, an access and mobility management function (access and mobility management function, AMF) network element, a session management function (session management function, SMF) network element, a user plane function (user plane function, UPF) network element, and a network data analytics function (network data analytics function, NWDAF) network element. Every two of these network elements may communicate with each other by using a service-based method. Certainly, when two network elements thereof need to communicate with each other, one network element needs to open a corresponding service method to another network element.

For ease of understanding, the following briefly describes some functional network elements mainly involved in FIG. 2A in the embodiments of this application.

A mobility management function network element is, for example, an AMF in FIG. 2A. The AMF is configured to manage mobile context of a terminal device, and is mainly responsible for interworking with an access network device. For example, the AMF is responsible for access management (access management, AM) and mobility management (mobility management, MM) of the terminal device. In addition, the AMF has functions such as non-access stratum (non-access-stratum, NAS) encryption and integrity protection, registration management, transfer of a session management (session management, SM) message between the terminal device and an SMF, or mobility event notification of the terminal device. The AMF and the SMF correspond to a mobility management entity (mobility management entity, MME) in a 4G network. It may be considered that after evolution from 4G to 5G, functions of the MME are separated into the AMF and the SMF.

A session management function network element is, for example, an SMF in FIG. 2A. The SMF is configured to manage session context, may provide session management functions such as session establishment, modification, and release, and is mainly responsible for providing quality of service (quality of service, QoS) flow binding for a session of the terminal device, maintaining a tunnel between a UPF and the access network device, allocating and managing an internet protocol (internet protocol, IP) address of the terminal device, configuring the UPF, and the like. The SMF may further perform service area division based on a data network name (data network name, DNN) corresponding to the session of the terminal device.

A user plane function network element is, for example, a UPF in FIG. 2A. The UPF is a user plane data forwarding entity, and is mainly responsible for connecting to an external network, for example, serving as an external packet data unit (packet data unit, PDU) session (session) point for data network interconnection, and has functions such as packet routing and forwarding, packet detection, user plane part policy execution, lawful interception, traffic usage reporting, or quality of service (quality of service, QoS) processing. The UPF corresponds to a serving gateway (serving gateway, SGW) and a packet data network gateway (packet data network gateway, PDN-GW) in the 4G network. It may be considered that a UPF in a 5G system is equivalent to a combination of an SGW and a PDN-GW in a 4G LTE system.

A unified data management network element is, for example, a UDM in FIG. 2A. The UDM is configured to store user data, such as subscription information of the terminal device, an attribute of the terminal device, and authentication/authorization information. The UDM may provide services for the AMF, the SMF, the NEF, and the AUSF through a Nudm service-based interface. For example, the AMF/SMF may obtain, from the UDM through the Nudm service-based interface, the subscription information of the terminal device related to the AMF/SMF.

A policy control function network element is, for example, a PCF in FIG. 2A. The PCF is a unified policy framework configured to guide network behavior, provides policy rule information and the like for a control plane function network element (for example, the AMF or the SMF), and may also manage some subscription information of the terminal device, for example, subscription information related to service access of the terminal device, for example, a service policy and a service access rule. The PCF may provide services for the AMF, the SMF, the NEF, and the AUSF through an Npcf service-based interface. For example, the AMF/SMF may obtain, from the PCF through the Npcf service-based interface, the subscription information of the terminal device related to the AMF/SMF.

In FIG. 2A, an NSSF may communicate with the AMF through an N22 interface; the AUSF may communicate with the AMF through an N12 interface, and the AUSF may communicate with the UDM through an N13 interface; the UDM may communicate with the AMF through an N8 interface, and the UDM may communicate with the SMF through an N10 interface; the SMF may communicate with the AMF through an N11 interface, the SMF may communicate with the PCF through an N7 interface, and the SMF may communicate with the UPF through an N4 interface; the PCF communicates with the AF through an N5 interface, and the PCF may communicate with the AMF through an N15 interface; the AMF may communicate with the terminal device through an N1 interface, and the AMF may communicate with the (R)AN through a control plane (control plane, CP) interface such as an N2 interface; the terminal device communicates with the (R)AN through an air interface; and the (R)AN may communicate with the UPF through an N3 interface. It should be understood that FIG. 2A is merely another example description of a network architecture to which embodiments of this application are applicable, and does not specifically limit a type, a quantity, a connection manner, and the like of network elements included in the network architecture to which this application is applicable.

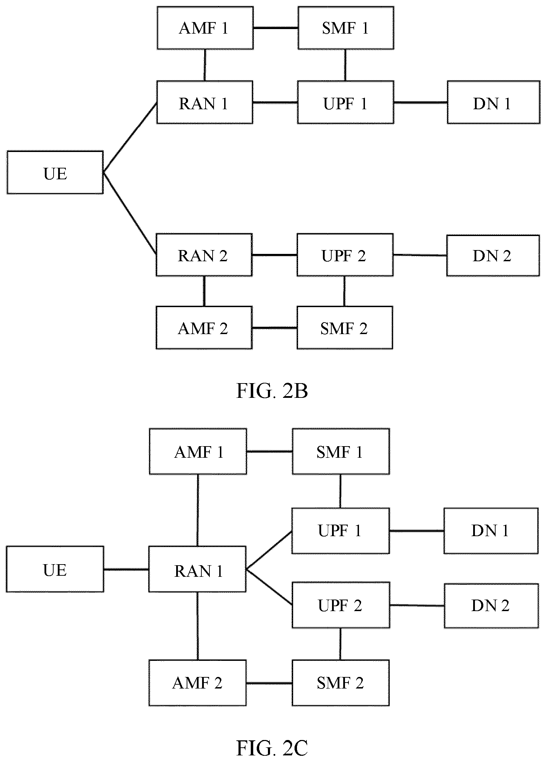

In the 5G network, a terminal device may access different core networks by using different access network devices. As shown in FIG. 2B, UE accesses a core network 1 by using a RAN 1. FIG. 2B shows some core network elements, namely, an AMF 1, an SMF 1, a UPF 1, and a DN 1, in the core network 1. The UE accesses a core network 2 by using a RAN 2. FIG. 2B shows some core network elements, namely, an AMF 2, an SMF 2, a UPF 2, and a DN 2, in the core network 2. Alternatively, one terminal device may access a plurality of core networks by using one access network device. As shown in FIG. 2C, UE accesses a core network 1 and a core network 2 by using a RAN 1. FIG. 2C shows some core network elements, namely, an AMF 1, an SMF 1, a UPF 1, and a DN 1, in the core network 1; and some core network elements, namely, an AMF 2, an SMF 2, a UPF 2, and a DN 2, in the core network 2. It may be understood that in the 5G network, one core network includes one AMF.

In the 5G network, the network is divided into a plurality of network slices, and different network slices may provide connection services for different services, for example, an enhanced mobile broadband (enhanced mobile broadband, eMBB) slice for a high-bandwidth service, and a vehicle to everything (vehicle to everything, V2X) slice for a low-latency and high-reliability requirement. In terms of a network architecture, the network slice is used as a logical network, and network isolation is implemented by using a shared network function. Each network slice corresponds to a set of logical core network elements, including an SMF, a PCF, a UPF, and the like. The terminal device may access a corresponding network slice based on a requirement.

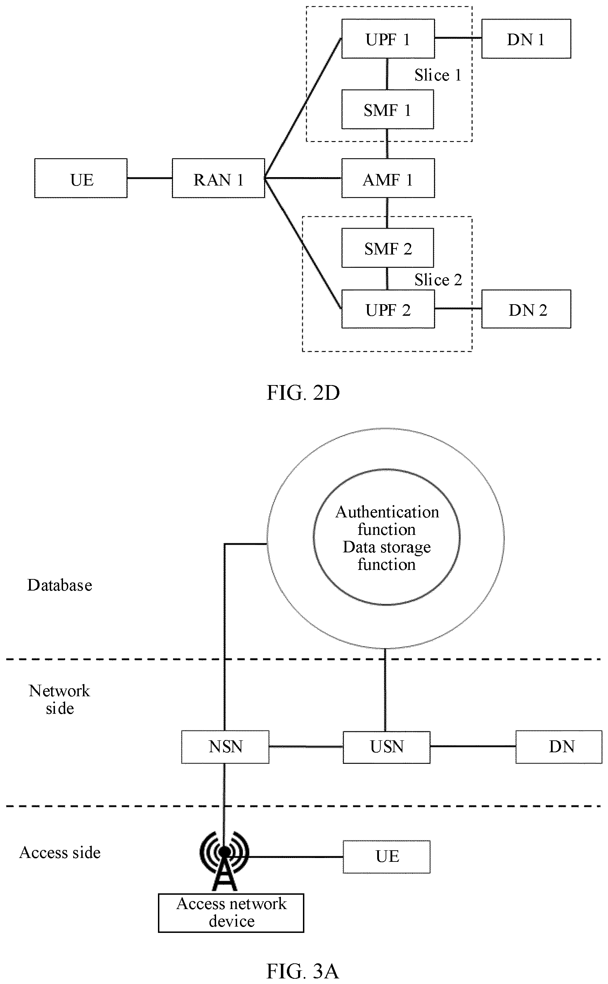

Currently, the terminal device registers with a 5G network, and registers with the 5G network only in one AMF network element. There is access and mobile context, and the access and mobile context includes an identifier corresponding to the terminal device, for example, a globally unique temporary identifier (globally unique temporary identifier, GUTI) of the terminal device in the AMF. A network slice accessed by the terminal device is managed by an AMF in a core network as a part of the access and mobility context of the terminal device. As shown in FIG. 2D, UE registers with a 5G network by using a RAN 1, completes the registration in an AMF 1, and further accesses a plurality of network slices managed by the AMF 1. FIG. 2D shows a slice 1 and a slice 2 that are managed by the AMF 1. Core network elements of the slice 1 include an SMF 1, a UPF 1, and a DN 1, and core network elements of the slice 2 include an SMF 2, a UPF 2, and a DN 2.

It can be learned from the foregoing that, in a current network slice design, network slices are not isolated. For example, when the terminal device accesses a network, the same AMF needs to be selected to serve all network slices required by the terminal device. Such a design reduces a control right of a user (e.g. the terminal device) on the network, including that different security mechanisms cannot be used for different network slices, for example, different or independent anonymization mechanisms cannot be used in different networks. Consequently, network security is reduced. For a network side, when the user needs to access different network slices, a "universal" AMF always needs to be selected to provide services for all network slices requested by the user. This further reduces network flexibility.

Based on this, the embodiments of this application provide a communication method and apparatus, to provide different temporary identities for a terminal device in different subnets in a network, and the terminal device obtains services of the different subnets by using the different temporary identities, so that a plurality of subnets are independent of each other, thereby improving network flexibility, and different security mechanisms may be used for the different subnets, thereby improving network security.

The communication method provided in the embodiments of this application may be applied to a scenario in which a network function is divided and a user accesses a subnet as required. Specifically, the method may be applied to the foregoing wireless communication network, for example, a 5G network, or a future new network architecture.

In a possible design, the future new network architecture may include two types of network elements, for example, a first-type network element that provides an access management function or an access authorization or authentication function for the user, and a second-type network element that provides a subnet service for the user. When the user needs to access one or more subnets, the user needs to be first authorized and authenticated by the first-type network element, and then accesses the second-type network element to obtain a corresponding subnet network service. It may be understood that the first-type network element is similar to an AMF network element in the 5G network, and the second-type network element is similar to a network element included in a network slice, for example, an SMF network element, or an NSSF network element that can schedule a network slice, in the 5G network. In a possible design, the AMF network element, an AM module, a network authentication functional module, or the like in the 5G network may continue to be used for a name of the first-type network element, and the SMF network element or the NSSF network element in the 5G network may continue to be used for a name of the second-type network element. Alternatively, the first-type network element and the second-type network element may be renamed as other names. Certainly, a description of a future subnet is not limited in the embodiments of this application. For example, the network slice in the 5G network may continue to be used for the future subnet, or another description, for example, a user-dedicated network, a user private network, or a user-dedicated node, may be used.

In an example, FIG. 3A shows a user centric network (user centric network, UCN) architecture. The following describes a possible implementation of the foregoing future new network architecture with reference to the UCN architecture. Certainly, it may be understood that the UCN is merely an example of a new network architecture, and a network architecture actually used in the future is not limited in the embodiments of this application.

The UCN mainly includes two types of network elements, namely, a network service node (network service node, NSN) and a user service node (user service node, USN). The NSN may be understood as a name of the first-type network element, and main functions of the NSN may include authentication on UE that is to perform access and creation and life cycle management of the USN. The USN may be understood as a name of the second-type network element. The USN is a node that provides a dedicated service for the UE on the network side, and is a node that integrates functions such as session management, policy management, and UE context management in original 5G. A database in FIG. 3A is configured to store subscription data of UE, and a data network (data network, DN) may be understood as one type of network, for example, an internet.

When the UE initially accesses a network, an NSN may access the database to obtain subscription information (or referred to as the subscription data) of the UE, and create, based on the subscription information of the UE, a USN corresponding to the UE. Further, the NSN may perform life cycle management on the USN corresponding to the UE, for example, release a resource of the USN after a use period of the USN expires. The USN may be created by the NSN or created and managed by an independent logical network element. For example, the logical function network element may be a network control function (network control function, NCF) network element. The USN may be understood as a dynamically generated UE-dedicated network element. The USN may perform a control plane signaling function. For example, the control plane signaling function includes at least one of functions such as session management, policy management, and UE context management. The USN may further perform a user plane function. The user plane function includes data forwarding, traffic statistics, quality of service (quality of service, QoS) processing, and the like. For example, the USN may be a digital twin function of a terminal device in a core network, and is a digital model corresponding to an actual behavior of the terminal device. Specifically, the USN may record a location, a service, artificial intelligence (artificial intelligence, AI) processing, and the like of the terminal device. For example, the USN may be a cloud server or a cloud terminal (for example, a cloud computer or a cloud mobile phone), and the terminal device may set, on the cloud server, a resource provided by an operator, for example, set QoS of a service and allocate bandwidth.

In addition, it should be noted that the USN and the NSN may alternatively be two types of sets of network elements or network functions. The NSN may be understood as a set of network elements or network functions that provide a network-level service, and may include an access management function, a network slice selection function, a network-level policy control function, and the like. The USN may be a set of network elements or network functions that provide a user-level service, and may include a user mobility management function, a session management function, a user-level policy control function, and the like.

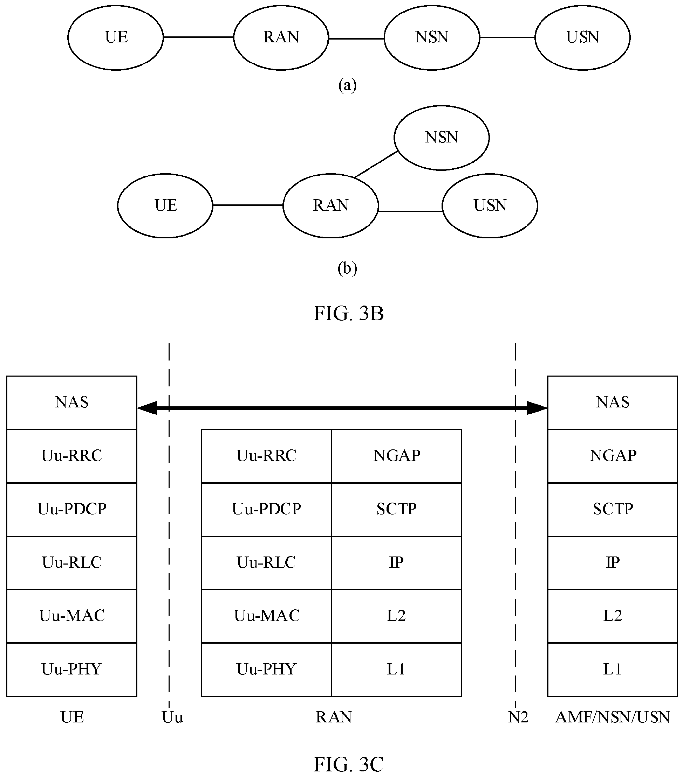

In a possible implementation, as shown in (a) in FIG. 3B, UE accesses a network by using a RAN, the RAN establishes direct communication with an NSN, and the NSN establishes direct communication with a USN. In another possible implementation, as shown in (b) in FIG. 3B, UE accesses a network by using a RAN, the RAN establishes direct communication with an NSN, and the RAN may also establish direct communication with a USN. Further, FIG. 3C shows a protocol stack. Communication between UE and a RAN complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical, PHY) layer. An interface between the UE and the RAN is referred to as a Uu interface, and RRC, PDCP, RLC, MAC, and PHY may also be referred to as Uu-RRC, Uu-PDCP, Uu-RLC, Uu-MAC, and Uu-PHY Communication between the UE and a core network element (for example, an AMF network element in a 5G network, for example, an NSN or a USN in a UCN) complies with a specific protocol layer structure, and the protocol layer structure includes a NAS layer. A protocol layer structure with which communication between the RAN and the core network element (for example, the AMF, the NSN, or the USN) complies includes a stream control transmission protocol (stream control transmission protocol, SCTP) layer, an internet protocol (internet protocol, IP) layer, an L2 layer, and an L1 layer. An interface between the RAN and the AMF may be referred to as an N2 interface, an interface between the RAN and the NSN may be referred to as the N2 interface, or an interface between the RAN and the USN may be referred to as the N2 interface.

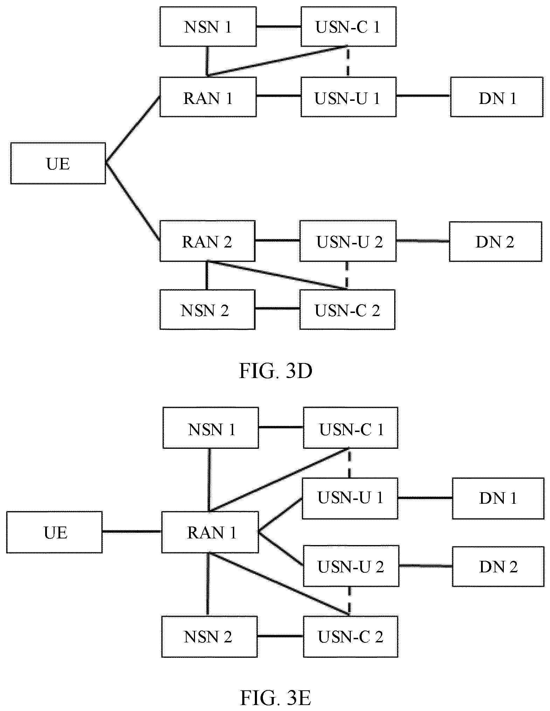

During actual deployment, when being connected to the access network device, the NSN may be deployed near the access network device, or may even be deployed in a centralized manner with the access network device. Functions of the USN may be further divided into a control plane function (USN-C) and a user plane function (USN-U). The control plane function is responsible for processing control plane signaling of the UE, and controlling the USN-U by using a session management function. The user plane function is mainly responsible for forwarding user plane data of the UE. In the UCN, one terminal device may simultaneously access a plurality of access network devices, to access networks (or understood as core networks) corresponding to the plurality of access network devices. As shown in FIG. 3D, UE accesses a core network 1 by using a RAN 1. FIG. 3D shows some core network elements, namely, an NSN 1, a USN 1 (divided into a USN-C 1 and a USN-U 1), and a DN 1, in the core network 1. The UE accesses a core network 2 by using a RAN 2. FIG. 3D shows some core network elements, namely, an NSN 2, a USN 2 (divided into a USN-C 2 and a USN-U 2), and a DN 2, in the core network 2. Alternatively, one terminal device may access a plurality of core networks by using one access network device. As shown in FIG. 3E, UE accesses a core network 1 and a core network 2 by using a RAN 1. FIG. 3E shows some core network elements, namely, an NSN 1, a USN 1 (divided into a USN-C 1 and a USN-U 1), and a DN 1, in the core network 1; and some core network elements, namely, an NSN 2, a USN 2 (divided into a USN-C 2 and a USN-U 2), and a DN 2, in the core network 2.

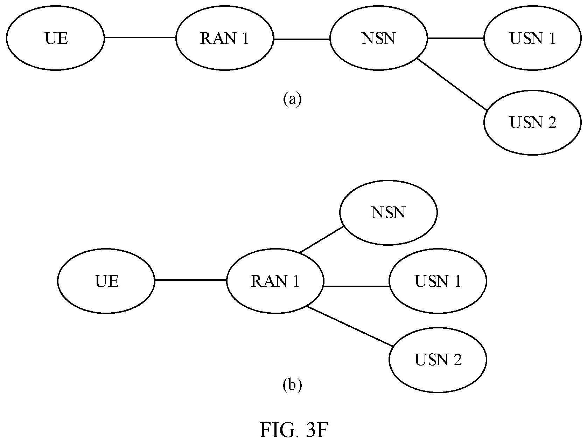

In addition, in a future network, there may be a scenario in which an AM function and an MM function are separated. In this scenario, there may be one AM function and a plurality of MM functions. For example, in a UCN, UE may be connected to one NSN responsible for the AM function and a plurality of USNs responsible for the MM function. One USN can be a public network USN or a private network USN. As shown in FIG. 3F, UE accesses a network by using a RAN 1. (a) in FIG. 3F shows that a core network includes one NSN and a plurality of USNs connected to the NSN, for example, a USN 1 and a USN 2, and the RAN 1 is connected to the NSN. (b) in FIG. 3F shows that a core network includes one NSN and a plurality of USNs, for example, a USN 1 and a USN 2. The RAN 1 is connected to the NSN, and the RAN 1 is connected to the USN 1 and the USN 2.

The following further describes in detail the method provided in the embodiments of this application with reference to Solution 1 and Solution 2.

### Solution 1:

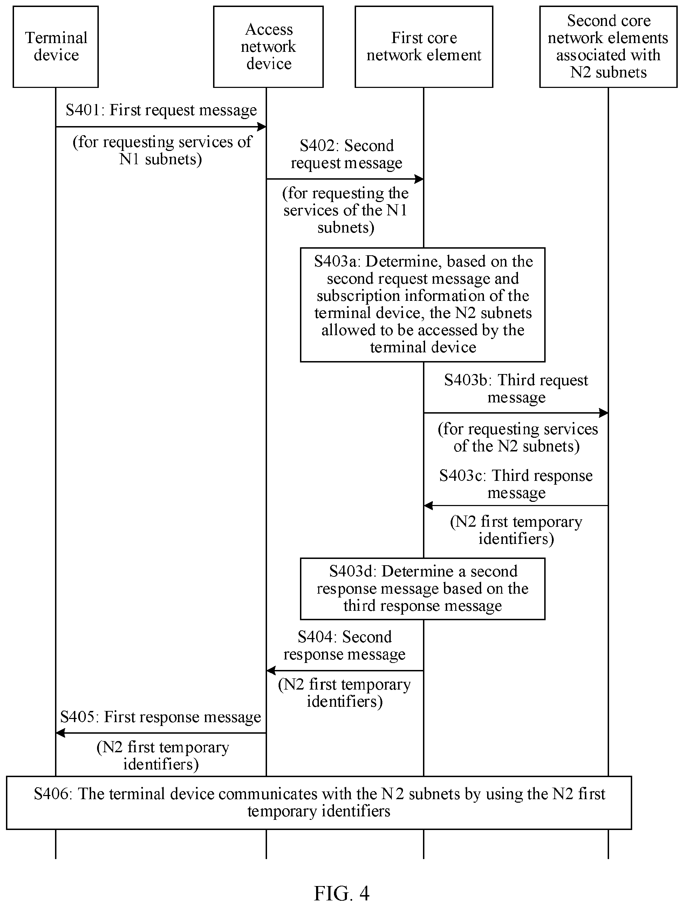

FIG. 4 shows a communication method. The communication method mainly includes the following procedure.

S401: A terminal device sends a first request message to an access network device, where the first request message is used to request to serve the terminal device in N1 subnets of a core network, and N1 is a positive integer greater than 1.

The core network may be a core network in a 5G network, and one subnet in the core network may include one or more network slices. For example, one subnet includes one network slice. It may be understood that the first request message requests to serve the terminal device in a plurality of network slices. Alternatively, the core network may be a core network in a UCN, and one subnet in the core network is associated with one USN network element. It may be understood that the first request message requests to serve the terminal device in subnets associated with a plurality of USNs. In this embodiment of this application, that the terminal device is served in the subnet may be registration of the terminal device in the subnet, a service connection of the terminal device in the subnet, or the like.

Specifically, the terminal device may first determine a subnet in which the terminal device needs to be served. For example, if the terminal device needs to be provided with a service by a subnet of a specified type, the terminal device requests, by using the first request message, the service of the subnet of the specified type, and the N1 subnets are subnets that meet the foregoing specified type. The specified type may be understood as a specified service type provided by the subnet, for example, including one or more of an internet access service, a low-latency and high-reliability communication service, a local area network service, an internet of things service, a satellite communication service, and another service. Alternatively, the specified type may be understood as a connection service type provided by the subnet, for example, including an IP connection service and a non-IP connection service. For another example, the terminal device may determine, based on locally configured (stored) configuration information of subnets, specific subnets of which services are required, namely, the N1 subnets, or the terminal device may obtain configuration information of such types of subnets from historically accessed subnets, to determine specific subnets of which services are required, namely, the N1 subnets. Optionally, configuration information of one subnet may identify the subnet, for example, may include a service type, an identifier, and an address of the subnet, and an address of a network element that provides a service for the terminal device in the subnet.

Optionally, a temporary identifier of the terminal device may be provided in the subnet that provides a service for the terminal device. In a possible implementation, the temporary identifier of the terminal device in the subnet includes the identifier of the subnet and other information. In this case, the identifier of the subnet may be learned of based on the temporary identifier of the terminal device in the subnet. If there is a subnet with which the terminal device historically registers or that historically provides a service for the terminal device, configuration information obtained by the terminal device from the subnet may further include a historical temporary identifier of the terminal device in the subnet, to identify context information of the terminal device in the subnet when the terminal device historically accesses the subnet. In this embodiment of this application, for ease of distinguishing from another temporary identifier, the historical temporary identifier is referred to as a second temporary identifier below.

Specifically, the first request message includes configuration information of each of the N1 subnets. Optionally, the first request message may further include a subscription permanent identifier (subscription permanent identifier, SUPI) of the terminal device.

Optionally, the first request message may be one piece of first signaling. For example, the first signaling is RRC signaling or a NAS message. The terminal device may simultaneously request, in one piece of RRC signaling or one NAS message, services, for example, registration, to be performed on the terminal device in the N1 subnets. Alternatively, the first request message may be implemented by using a plurality of pieces of first signaling. For example, that the terminal device sends the first request message includes: The terminal device sends N1 pieces of first signaling to the access network device, where the N1 pieces of first signaling are in one-to-one correspondence with the N1 subnets, and a j^{th} piece of first signaling in the N1 pieces of first signaling is used to request a service, for example, registration, to be performed on the terminal device in a j^{th} subnet of the N1 subnets. The j^{th} piece of first signaling includes configuration information of the j^{th} subnet. It may be understood that the terminal device may simultaneously or not simultaneously send the N1 pieces of first signaling.

S402: The access network device sends a second request message to a first core network element based on the first request message, where the second request message is used to request to serve the terminal device in the N1 subnets of the core network, and the second request message includes the configuration information of each of the N1 subnets.

Specifically, the access network device may determine the first core network element according to a specific criterion. The first core network element may be a network element that can provide one or more of the following services for the terminal device: an access management service, a mobility management service, an authentication service, and a connection service. For example, in the 5G network, the first core network element may be anAMF network element. For another example, in the UCN, the first core network element may be an NSN network element. There are many characteristics criteria. For example, the access network device may determine the first core network element based on a local configuration, or the first core network element may communicate with the access network device. Alternatively, the access network device may determine, based on the configuration information, of the N1 subnets, included in the first request message, a first core network element that serves the N1 subnets. For example, the access network device may query, from a DNS server or another core network element based on the configuration information of the N1 subnets, an identifier, address information, and the like that are of a core network element and that correspond to the configuration information of the N1 subnets (for example, identifiers of the N1 subnets), and further determine, based on a query result, a first core network element that serves the N1 subnets.

Optionally, for any one of the N1 subnets, configuration information of the subnet in the second request message may include a part or all of the configuration information of the subnet in the first request message.

Optionally, the second request message may be one piece of second signaling, and the access network device may simultaneously request, in one piece of second signaling, services, for example, registration, to be performed on the access network device in the N1 subnets. Alternatively, the second request message may be implemented by using a plurality of pieces of second signaling. For example, that the access network device sends the second request message includes: The access network device sends N1 pieces of second signaling to the first core network element, where the N1 pieces of second signaling are in one-to-one correspondence with the N1 subnets, and a j^{th} piece of second signaling in the N1 pieces of second signaling is used to request a service, for example, registration to be performed on the access network device in a j^{th} subnet of the N1 subnets. The j^{th} piece of second signaling includes configuration information of the j^{th} subnet. It may be understood that the access network device may simultaneously or not simultaneously send the N1 pieces of second signaling. For example, in the 5G network, one piece of or N1 pieces of second signaling corresponding to the second request message may be a next generation application protocol (next generation application protocol, NGAP) message; or in the UCN, one piece of or N1 pieces of second signaling corresponding to the second request message may be signaling defined by a communication protocol between the access network device and the NSN network element. Optionally, an access network element may directly forward the first request message if the first request message is the NAS message, that is, the second request message is the same as the first request message.

In addition, optionally, the access network device may further include related information of the access network device in the second request message, for example, an identifier of the access network device and port information of the access network device. The access network element may alternatively use the first request message as a part of the second request message if the first request message is the NAS message. For example, the second request message includes related information of the access network device and content of the NAS message.

S403: The first core network element determines a second response message, where the second response message indicates that the terminal device is served in N2 subnets, the N2 subnets include some or all of the N1 subnets, N2 is a positive integer less than or equal to N1, and the second response message includes a first temporary identifier of the terminal device in each of the N2 subnets.

In an example, FIG. 4 shows an optional implementation by using S403a to S403d. Details are as follows:
S403a: The first core network element determines, based on the second request message and the subscription information of the terminal device, the N2 subnets allowed to be accessed by the terminal device.

The first core network element may obtain the subscription information of the terminal device from a system or a core network element that stores the subscription information of the terminal device. For example, the first core network element obtains, based on identification information of the terminal device (for example, the SUPI or the second temporary identifier that is in the subnet and that is mentioned in S401), subscription information corresponding to the identification information of the terminal device from the system or the core network element that stores the subscription information of the terminal device. Further, the first core network element may determine, based on the subscription information of the terminal device, whether the N1 subnets correspondingly requested in the second request message are allowed to be accessed by the terminal device.

For a relationship between the N1 subnets and the N2 subnets, refer to the following possible manner for understanding: In a first possible manner, if some or all of the N1 subnets are allowed to be accessed by the terminal device, the N2 subnets are included in the N1 subnets, and N2 ≤ N1. In a second possible manner, if some subnets in the N1 subnets are allowed to be accessed by the terminal device, the N2 subnets may include the some subnets in the N1 subnets and other subnets. The first core network element may independently determine, based on the subscription information of the terminal device, the other subnets that can be accessed by the terminal device. Optionally, a quantity of the other subnets may be N1 to N2 or another value. This is not limited in this embodiment of this application. In a third possible manner, if none of the N1 subnets are allowed to be accessed by the terminal device, the first core network element may independently determine based on the subscription information of the terminal device and/or a local policy of an operator, the N2 subnets that can be accessed by the terminal device. There is no overlapping subnet between the N2 subnets and the N1 subnets. In conclusion, when the first core network element determines that there is a subnet that cannot provide a service in the N1 subnets requested by the terminal device, the first core network element may independently determine for the terminal device, a subnet that is requested and that provides a service.

S403b: The first core network element may send a third request message to second core network elements associated with the N2 subnets.

The third request message is used to request to separately serve the terminal device in the N2 subnets, or this is described as follows: The third request message is used to request, from a second core network element associated with an i^{th} subnet in the N2 subnets, to serve the terminal device in the i^{th} subnet. N2 is a positive integer, and i is a positive integer from 1 to N2.

In a possible design, the second core network elements associated with the N2 subnets are not completely the same. For example, in the UCN, the second core network element may be a USN. Different subnets are associated with different USNs, the second core network elements associated with the N2 subnets include N2 USNs, and the i^{th} subnet in the N2 subnets is associated with an i^{th} USN in the N2 USNs. Alternatively, the N2 subnets are divided into a plurality of subnet groups, different subnet groups are associated with different USNs, and subnets in a same subnet group are associated with a same USN. In this case, a quantity of USNs included in the second core network elements associated with the N2 subnets is less than N2. It may be understood that in the UCN, one USN may be set to be associated with a single subnet or some subnets in the N2 subnets. For another example, in the 5G network, the second core network element may be an SMF. Different subnets are associated with different SMFs, the second core network elements associated with the N2 subnets include N2 SMFs, and the i^{th} subnet in the N2 subnets is associated with an i^{th} SMF in the N2 SMFs. Alternatively, the N2 subnets are divided into a plurality of subnet groups, different subnet groups are associated with different SMFs, and subnets in a same subnet group are associated with a same SMF. In this case, a quantity of SMFs included in the second core network elements associated with the N2 subnets is less than N2. It may be understood that in the 5G network, one SMF may be set to be associated with a single subnet or some subnets in the N2 subnets. In another possible design, different subnets in the N2 subnets are associated with a same second core network element. In the 5G network, the same second core network element with which all the N2 subnets are associated is an NSSF network element, an SMF network element, or the like.

The 5G network is used as an example. The third request message may include one piece of third signaling, to be specific, the first core network element (e.g. an AMF) requests services of the N2 subnets from the second core network element (for example, an SMF) by using one piece of third signaling; or the third request message may include N2 pieces of third signaling, and the first core network element (e.g. an AMF) may request a service of the i^{th} subnet in the N2 subnets from the second core network element (for example, an SMF) by using an i^{th} piece of third signaling in the N2 pieces of third signaling. For example, different subnets in the UCN are associated with different USN network elements. The third request message may include N2 pieces of third signaling. The first core network element (e.g. an NSN) may request a service of the i^{th} subnet in the N2 subnets from the second core network element (e.g. a USN) by using an i^{th} piece of third signaling in the N2 pieces of third signaling.

Optionally, when the third request message includes the N2 pieces of third signaling, different third signaling may be transmitted on different communication links (e.g. tunnels), in other words, different third signaling has different carriers. In a possible manner, the first core network element may establish N2 second communication links with the second core network elements associated with the N2 subnets. For example, when different subnets are associated with different second core network elements in the UCN, the second core network elements associated with the N2 subnets include N2 second core network elements, the first core network element may establish an i^{th} second communication link with an i^{th} second core network element associated with the i^{th} subnet. The access network device may include identification information of the N2 first communication links in the third request message. Specifically, the i^{th} second communication link in the N2 second communication links is used to transmit the i^{th} piece of third signaling in the N2 pieces of third signaling, and the i^{th} piece of third signaling in the N2 pieces of third signaling may include the identification information of the i^{th} second communication link used to transmit the i^{th} piece of third signaling. Optionally, the identification information of the i^{th} second communication link may include a port identifier that is in the first core network element and that is used to transmit the i^{th} piece of third signaling, and different second communication links correspond to different port identifiers.

Optionally, the first core network element may allocate a temporary identifier in the first core network element to the terminal device. For ease of differentiation, the temporary identifier of the terminal device in the first core network element is described as a fourth temporary identifier below. There are one or more fourth temporary identifiers. For example, the first core network element may allocate N2 fourth temporary identifiers to the terminal device, where the N2 fourth temporary identifiers are in one-to-one correspondence with the N2 subnets. Based on this, the first core network element may include the N2 fourth temporary identifiers in the third request message. For example, when the third request message includes the N2 pieces of third signaling, the i^{th} piece of third signaling in the N2 pieces of third signaling may include an i^{th} fourth temporary identifier. In an example, the i^{th} fourth temporary identifier may also be denoted as a UE-NSN-NGAP ID (i) in the UCN. In an example, the i^{th} fourth temporary identifier may also be denoted as a UE AMF NGAP ID (i) in 5G. Alternatively, it may be understood that the first core network element is an AMF network element in 5G, and the N2 fourth temporary identifiers allocated by the AMF network element to the terminal device are specifically N2 GUTIs, where the i^{th} fourth temporary identifier may be a GUTI (i).

In addition, optionally, the first core network element may determine a QoS parameter of the terminal device based on the subscription information of the terminal device described in S403a. For example, the QoS parameter may include bandwidth information that may be used by the terminal device in a network. In a possible design, the bandwidth information that may be used by the terminal device in the network may all be indicated by using a UE-aggregate maximum bit rate (aggregate maximum bit rate, AMBR) parameter. Further, the first core network element may determine, based on the bandwidth information that may be used by the terminal device in the network, a maximum bit rate (maximum bit rate, MBR) parameter corresponding to the terminal device in each of the N2 subnets. Further, the first core network element may further include, in the third request message, the MBR parameter corresponding to the terminal device in each of the N2 subnets. Certainly, it may be understood that when the third request message includes the N2 pieces of third signaling, the i^{th} piece of third signaling in the N2 pieces of third signaling includes an MBR parameter corresponding to the terminal device in the i^{th} subnet.

Further, the first core network element may further send obtained related information of the access network device to the second core network elements associated with the N2 subnets.

S403c: The first core network element obtains a third response message from the second core network elements associated with the N2 subnets.

The third response message indicates that the terminal device is served in the N2 subnets. The second core network elements associated with the N2 subnets may allocate temporary identifiers, denoted as first temporary identifiers, to the terminal device in the N2 subnets. The third response message includes a first temporary identifier of the terminal device in each of the N2 subnets, and there are a total of N2 first temporary identifiers. It may be understood that, for a subnet included in both the N2 subnets and the N1 subnets, a first temporary identifier of the terminal device in the subnet is the same as a second temporary identifier of the terminal device in the subnet, or a first temporary identifier of the terminal device in the subnet is reallocated and is different from a second temporary identifier of the terminal device in the subnet.

In addition, in an optional implementation, the temporary identifier used by the terminal device in the subnet may alternatively be allocated by the first core network element. For example, the first temporary identifier may be the same as a fourth temporary identifier.

Specifically, the third response message corresponds to the third request message described in S403b. When the third request message includes one piece of third signaling, the third response message includes one piece of fourth signaling, and the fourth signaling corresponds to the N2 subnets. When the third request message includes the N2 pieces of third signaling, the third response message includes N2 pieces of fourth signaling, an i^{th} piece of fourth signaling in the N2 pieces of fourth signaling corresponds to the i^{th} subnet in the N2 subnets, and the second core network element associated with the i^{th} subnet sends the i^{th} piece of fourth signaling to the first core network element, where the i^{th} piece of fourth signaling indicates that the terminal device is served in the i^{th} subnet.

Optionally, the third response message may alternatively include identifiers of the N2 subnets. For example, when the third response message includes the N2 pieces of fourth signaling, the i^{th} piece of fourth signaling in the N2 pieces of fourth signaling may further include an identifier of the i^{th} subnet.

For example, in the 5G network, the second core network elements associated with the N2 subnets are one NSSF network element or one SMF network element, the third request message sent by the AMF network element to the NSSF network element or the SMF network element includes one piece of third signaling, and the third response message sent by the NSSF network element or the SMF network element to the AMF includes one piece of fourth signaling. For another example, in the 5G network, the second core network elements associated with the N2 subnets are one NSSF network element or one SMF network element, the third request message sent by the AMF network element to the NSSF network element or the SMF network element includes N2 pieces of third signaling, and the third response message sent by the NSSF network element or the SMF network element to the AMF includes N2 pieces of fourth signaling. For another example, in the UCN, the second core network elements associated with the N2 subnets include N2 USN network elements, the third request message sent by the NSN network element to the N2 USN network elements corresponds to N2 pieces of third signaling, and the NSN network element sends an i^{th} piece of third signaling in the N2 pieces of third signaling to an i^{th} USN network element in the N2 USN network elements. In this case, the i^{th} USN network element in the N2 USN network elements sends, to the NSN network element, an i^{th} fourth signaling in N2 pieces of fourth signaling corresponding to the third response message.

Specifically, when the third response message includes the N2 pieces of fourth signaling, the i^{th} piece of fourth signaling includes an i^{th} first temporary identifier in the N2 first temporary identifiers, or this is described as follows: The i^{th} piece of fourth signaling in the N2 pieces of fourth signaling includes the first temporary identifier of the terminal device in the i^{th} subnet. In an example, the i^{th} first temporary identifier may also be denoted as a USN-UE ID (i) in the UCN. If the first temporary identifier is the same as the fourth temporary identifier, the i^{th} first temporary identifier in the UCN may also be denoted as UE-NSN-NGAP ID (i). In an example, in the 5G network, when the second core network element is an NSSF network element, the i^{th} first temporary identifier may also be denoted as an NSSF-UE ID (i); or when the second core network element is an SMF network element, the i^{th} first temporary identifier may also be denoted as an SMF-UE ID (i). If the first temporary identifier is the same as the fourth temporary identifier, the i^{th} first temporary identifier may also be denoted as a UE AMF NGAP ID (i) or a GUTI (i) in 5G.

Optionally, when the third response message includes the N2 pieces of fourth signaling, different fourth signaling may be transmitted on different communication links (e.g. tunnels), in other words, different fourth signaling has different carriers. In a possible manner, corresponding to N2 second communication links between the first core network element and the second core network elements associated with the N2 subnets, the second core network element associated with the i^{th} subnet in the N2 subnets sends the i^{th} piece of fourth signaling in the N2 pieces of fourth signaling, where the i^{th} piece of fourth signaling may include identification information of a second communication link used to transmit the i^{th} piece of fourth signaling, for example, a port identifier in the second core network element associated with the i^{th} subnet, and a port identifier that is in the first core network element and that is used to transmit the i^{th} piece of fourth signaling. Different fourth signaling corresponds to different port identifiers. In such a design, when the first core network element communicates with the second core network element, transmission is performed based on different communication links, so that both the communication parties can identify information related to a specified subnet.

Optionally, when the third request message includes the N2 fourth temporary identifiers, the second core network elements associated with the N2 subnets may construct a mapping relationship between the N2 first temporary identifiers and the N2 fourth temporary identifiers, or construct a mapping relationship between the N2 first temporary identifiers, the N2 fourth temporary identifiers, and the N2 subnets. For example, the i^{th} first temporary identifier in the N2 first temporary identifiers corresponds to the i^{th} fourth temporary identifier in the N2 fourth temporary identifiers. Based on this, after obtaining the N2 first temporary identifiers, the first core network element also constructs, in a same manner, the mapping relationship between the N2 first temporary identifiers and the N2 fourth temporary identifiers, or the mapping relationship between the N2 first temporary identifiers, the N2 fourth temporary identifiers, and the N2 subnets. In such a design, when the first core network element communicates with the second core network element, both the communication parties can identify information related to a specified subnet based on the first temporary identifier or the fourth temporary identifier.

In addition, optionally, if the third request message further includes a QoS parameter, for example, an MBR parameter, corresponding to the terminal device in each of the N2 subnets, the second core network element associated with the i^{th} subnet in the N2 subnets may determine, based on the MBR parameter corresponding to the terminal device in the i^{th} subnet, access configuration information that may be allocated to the terminal device in the i^{th} subnet, where the access configuration information includes a bandwidth resource that may be occupied by the terminal device. Alternatively, the core network element configured to store the subscription information of the terminal device may determine, based on bandwidth information (for example, an AMBR parameter) that may be used by the terminal device in the network, the MBR parameter corresponding to the terminal device in each of the N2 subnets, and notify the second core network elements associated with the N2 subnets of the MBR parameter corresponding to the terminal device in each of the N2 subnets. Further, the second core network element associated with the i^{th} subnet in the N2 subnets determines, based on the MBR parameter corresponding to the terminal device in the i^{th} subnet, access configuration information that may be allocated to the terminal device in the i^{th} subnet, where the access configuration information includes a bandwidth resource that may be occupied by the terminal device. Further, the second core network element associated with the i^{th} subnet in the N2 subnets may further send, to the first core network element, the MBR parameter corresponding to the terminal device in the i^{th} subnet, so that the first core network element can obtain the MBR parameter corresponding to the terminal device in each of the N2 subnets.

S403d: The first core network element determines a second response message based on the third response message.

The second response message includes the first temporary identifier of the terminal device in each of the N2 subnets.

In addition to S403a to S403d shown in FIG. 4, in another optional implementation, the first core network element requests, based on the second request message, the second core network elements associated with the N1 subnets to serve the terminal device in the N1 subnets. Further, the second core network elements associated with the N1 subnets may obtain the subscription information of the terminal device, and determine, in the N1 subnets, N2 subnets allowed to be accessed by the terminal device, where the N2 subnets include some or all of the N1 subnets. Further, the second core network elements associated with the N2 subnets may respond to the request of the first core network element, and complete services for the terminal device in the N2 subnets. Similarly, the second core network elements associated with the N2 subnets may feed back N2 first temporary identifiers of the terminal device to the first core network element. The first core network element may allocate N2 fourth temporary identifiers in the first core network element to the terminal device, to construct a mapping relationship between the N2 first temporary identifiers, the N2 fourth temporary identifiers, and the N2 subnets. In addition, optionally, the second core network elements associated with the N2 subnets may respond to the request of the first core network element by using N2 pieces of fourth signaling. For a related definition of the fourth signaling, refer to the description in S403c for understanding.

S404: The first core network element sends the second response message to the access network device, where the second response message indicates that the terminal device is served in the N2 subnets.

The second response message includes the first temporary identifier of the terminal device in each of the N2 subnets. Specifically, the second response message may include one piece of or N2 pieces of fifth signaling. For example, in the 5G network, the fifth signaling may be NAS signaling or an NGAP message; or in the UCN, the fifth signaling may be signaling defined according to a communication protocol between the access network device and the first core network element (e.g. the NSN network element). It may be understood that when the second response message includes the N2 pieces of fifth signaling, an i^{th} piece of fifth signaling in the N2 pieces of fifth signaling includes the first temporary identifier of the terminal device in the i^{th} subnet of the N2 subnets.

Optionally, when the third response message may include the identifiers of the N2 subnets, the second response message may also include the identifiers of the N2 subnets. For example, when the second response message includes the N2 pieces of fifth signaling, the i^{th} piece of fifth signaling in the N2 pieces of fifth signaling may further include the identifier of the i^{th} subnet.

Optionally, when the second response message includes the N2 pieces of fifth signaling, different fifth signaling may be transmitted on different communication links (e.g. tunnels), in other words, different fifth signaling has different carriers. In a possible manner, the first core network element may establish N2 first communication links with the access network device, and store a mapping relationship between the N2 first communication links and the foregoing N2 second communication links, for example, an i^{th} first communication link in the N2 first communication links is associated with the i^{th} second communication link in the N2 second communication links, where both the i^{th} first communication link and the i^{th} second communication link are used to transmit signaling related to the i^{th} subnet. Specifically, the first core network element sends the i^{th} piece of fifth signaling in the N2 pieces of fifth signaling on the i^{th} first communication link, where the i^{th} piece of fifth signaling may include identification information of the i^{th} first communication link. For example, the identification information of the i^{th} first communication link may include a port identifier that is in the first core network element and that is used to send the i^{th} piece of fifth signaling, and different first communication links correspond to different port identifiers.

Based on this, when obtaining the second response message, the access network device may determine identification information of the N2 first communication links between the access network device and the first core network element, for example, N2 port identifiers in the first core network element. Further, optionally, the access network device may configure N2 port identifiers in the access network device to be in one-to-one correspondence with the N2 port identifiers of the first core network element, and notify the first core network element of a mapping relationship between the N2 port identifiers in the access network device and the N2 port identifiers of the first core network element. In such a design, when the access network device communicates with the first core network element, transmission is performed based on different communication links, so that both the communication parties can identify information related to a specified subnet.

Optionally, the first core network element may further include the N2 fourth temporary identifiers in the second response message. For a definition of the fourth temporary identifier, refer to the description in S403b for understanding. When the second response message includes the N2 pieces of fifth signaling, the first core network element may include, in the i^{th} piece of fifth signaling in the N2 pieces of fifth signaling, the i^{th} fourth temporary identifier in the N2 fourth temporary identifiers. Based on this, the access network device may allocate N2 third temporary identifiers in the access network device to the terminal device based on the N2 fourth temporary identifiers, where the N2 third temporary identifiers are in one-to-one correspondence with the N2 fourth temporary identifiers. For example, an i^{th} third temporary identifier in the N2 third temporary identifiers may also be denoted as a UE-RAN-NGAP ID (i) or a radio network temporary identifier (radio network temporary identifier, RNTI) (i). The access network device may further notify the first core network element of a mapping relationship between the N2 third temporary identifiers and the N2 fourth temporary identifiers. In such a design, when the access network device communicates with the first core network element, both the communication parties may identify information related to a specified subnet based on the third temporary identifier or the fourth temporary identifier.

In addition, optionally, the first core network element may further send, to the access network device, a QoS parameter, for example, an MBR parameter, corresponding to the terminal device in each of the N2 subnets. Optionally, the first core network element may further send first information to the access network device, where the first information indicates access configuration information allocated to the terminal device in some or all of the N2 subnets.

S405: The access network device sends a first response message to the terminal device based on the second response message, where the first response message indicates that the terminal device is served in the N2 subnets, and the first response message includes the first temporary identifier of the terminal device in each of the N2 subnets.

Specifically, the first response message may be one piece of sixth signaling. For example, the sixth signaling is RRC signaling. The access network device indicates, in one piece of RRC signaling, that the terminal device is served in the N2 subnets. Alternatively, the first response message may include N2 pieces of sixth signaling. For example, the sixth signaling is RRC signaling. The access network device indicates, in an i^{th} piece of sixth signaling in the N2 pieces of RRC signaling, that the terminal device is served in the i^{th} subnet in the N2 subnets.

Optionally, when the second response message may include the identifiers of the N2 subnets, the first response message may also include the identifiers of the N2 subnets. For example, when the first response message includes the N2 pieces of sixth signaling, the i^{th} piece of sixth signaling in the N2 pieces of sixth signaling may further include the identifier of the i^{th} subnet.

The following describes in detail a manner in which the access network device sends the first response message to the terminal device by using Manner 1 to Manner 3.

Manner 1: When the first response message includes the N2 pieces of sixth signaling (e.g. a RRC signaling), different sixth signaling may be transmitted on different air interface resources (or referred to as air interface links or RRC connections), in other words, different sixth signaling has different carriers. In a possible manner, the access network device may configure N2 air interface resources for communicating with the terminal device, establish a mapping relationship between the N2 air interface resources and the N2 first communication links, and establish a mapping relationship between the N2 air interface resources and the N2 first temporary identifiers. Further, the access network device may include, in the i^{th} piece of sixth signaling in the N2 pieces of sixth signaling, identification information of an i^{th} air interface resource in the N2 air interface resources. In such a design, when the access network device communicates with the terminal device, transmission is performed based on different air interface resources, so that both the communication parties can identify information related to a specified subnet.

In an optional implementation, the first core network element may indicate configuration information of each air interface resource in the N2 air interface resources to the access network device, where the configuration information of the air interface resource includes one or more of the following: quality of service information, bandwidth information, scheduling priority information, a time-frequency resource, antenna port information, or polarization information. The first core network element may determine configuration information of the i^{th} air interface resource in the N2 air interface resources based on the MBR parameter corresponding to the terminal device in the i^{th} subnet of the N2 subnets. In another optional implementation, the access network device may obtain, from the first core network element, the MBR parameter corresponding to the terminal device in each of the N2 subnets, and further, the access network device may determine configuration information of the i^{th} air interface resource in the N2 air interface resources based on the MBR parameter corresponding to the terminal device in the i^{th} subnet of the N2 subnets.

Manner 2: The access network device may include, in the first response message, the N2 third temporary identifiers configured for the terminal device in the access network device, where the N2 third temporary identifiers are in one-to-one correspondence with the N2 first temporary identifiers. When the first response message includes the N2 pieces of sixth signaling, the access network device may include, in the i^{th} piece of sixth signaling in the N2 pieces of sixth signaling, the i^{th} third temporary identifier in the N2 third temporary identifiers. For example, the i^{th} third temporary identifier in the N2 third temporary identifiers may also be denoted as a UE-RAN-NGAP ID (i) or an RNTI (i). Based on this, the terminal device may determine a mapping relationship between the N2 third temporary identifiers and the N2 first temporary identifiers. In such a design, when the access network device communicates with the terminal device, both the communication parties can identify information related to a specified subnet based on the third temporary identifier.

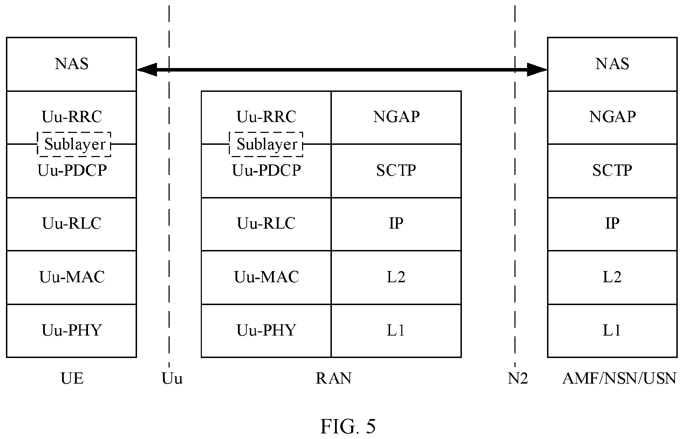

Manner 3: FIG. 5 shows a network protocol stack. Based on those shown in FIG. 3C, a sublayer or a logical function is added to a protocol stack between the access network device and the terminal device, to map upper-layer data and lower-layer data (where a specific mapping relationship may be configured by the access network device for the terminal device). The logical function may be deployed at a Uu-RRC layer or at a lower layer below the Uu-RRC layer. If the sublayer is used as an independent sublayer, for example, as shown in FIG. 5, the sublayer may be deployed between the Uu-RRC layer and a Uu-PDCP layer. It may be understood that the sublayer can be used to distribute one piece of RRC signaling. When the first response message includes one piece of sixth signaling (e.g. a RRC signaling), although using one RRC connection, the access network device divides the N2 communication links at the foregoing sublayer, and transmits an i^{th} piece of indication information on the i^{th} communication link in the N2 communication links, where the i^{th} piece of indication information indicates that the terminal device is served in the i^{th} subnet, and the i^{th} piece of indication information includes the first temporary identifier of the terminal device in the i^{th} subnet. In a possible manner, the access network device may configure identification information of the N2 communication links at the sublayer, and add identification information of the i^{th} communication link in the N2 communication links to the i^{th} piece of indication information. In another possible manner, the access network device may add the i^{th} third temporary identifier of the terminal device in the access network device to the i^{th} piece of indication information. In such a design, when the access network device communicates with the terminal device, transmission is performed based on different communication links, and both the communication parties can identify information related to a specified subnet.

In addition, optionally, if the first core network element sends the first information to the access network device in S404, the first information indicates access configuration information allocated to the terminal device in some or all of the N2 subnets. The access network device may further send the first information to the terminal device.

S406: The terminal device communicates with the N2 subnets by using the N2 first temporary identifiers.

Specifically, the terminal device may send information related to the i^{th} subnet to the access network device on a related air interface resource based on the i^{th} first temporary identifier in the N2 first temporary identifiers, to further communicate with the first core network element and the i^{th} subnet by using the access network device. It may be understood that the terminal device communicates with the N2 subnets by using the N2 first temporary identifiers includes: The terminal device sends, by using the i^{th} first temporary identifier through the access network device, the information related to the i^{th} subnet to the first core network element and the second core network element associated with the i^{th} subnet. Alternatively, the terminal device sends, by using the i^{th} first temporary identifier through the access network device, the information related to the i^{th} subnet to the first core network element and a core network element deployed in the i^{th} subnet.

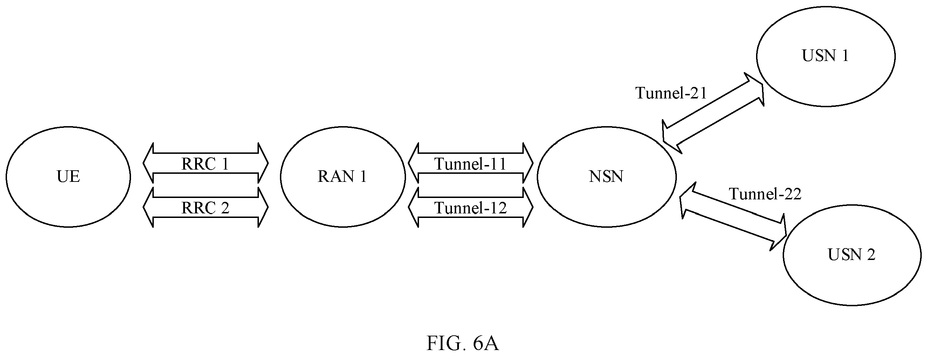

With reference to FIG. 6A to FIG. 6C, the following describes in detail an example in which the terminal device communicates with each subnet after registering with and accessing the N2 subnets.

Example 1: When the N2 air interface resources are established between the terminal device and the access network device, the terminal device may send the information related to the i^{th} subnet on the i^{th} air interface resource based on a mapping relationship between the i^{th} first temporary identifier and identification information of the i^{th} air interface resource. As shown in FIG. 6A, for example, the first core network element in the UCN is an NSN network element, N2 is 2, and the second core network element includes a USN 1 and a USN 2. Two air interface resources (namely, an RRC 1 connection and an RRC 2 connection) are established between the terminal device (e.g. a UE) and the access network device (e.g. a RAN). Two communication links are established between the RAN and the NSN network element, and are denoted as a tunnel-11 and a tunnel-12. Two communication links are established between the NSN network element and the two USN network elements, and are denoted as a tunnel-21 and a tunnel-22. There is an independent communication path between the terminal device and each of the N2 subnets. Based on this, for example, a second subnet represents a subnet with which the terminal device already registers, and the second subnet is a subnet associated with the USN 2. When the terminal device needs to transmit information to the second subnet, the terminal device may determine a corresponding air interface resource (e.g. a RRC 2 connection) by using a first temporary identifier in the second subnet. The terminal device sends information related to the second subnet to the access network device on the air interface resource (e.g. a RRC 2 connection). The access network device may determine the tunnel-12 corresponding to the RRC 2 connection, and send the information related to the second subnet to the NSN network element on the tunnel-12. Further, the NSN network element may determine the tunnel-22 corresponding to the tunnel-12, and send the information related to the second subnet to the USN 2 on the tunnel-22

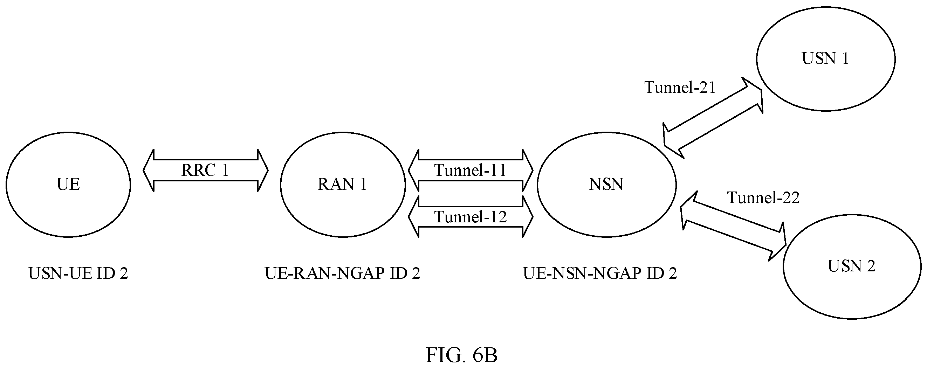

Example 2: When the access network device configures the N2 third temporary identifiers for the terminal device, the terminal device may add, based on the mapping relationship between the i^{th} first temporary identifier and the i^{th} third temporary identifier, the i^{th} third temporary identifier when sending the information related to the i^{th} subnet. As shown in FIG. 6B, for example, the first core network element in the UCN is an NSN network element, N2 is 2, and the second core network element includes a USN 1 and a USN 2. One air interface resource (namely, an RRC 1 connection) is established between the terminal device (e.g. a UE) and the access network device (e.g. a RAN node). Two communication links are established between the RAN and the NSN network element, and are denoted as a tunnel-11 and a tunnel-12. Two communication links are established between the NSN network element and the two USN network elements, and are denoted as a tunnel-21 and a tunnel-22. Based on this, for example, a second subnet represents a subnet with which the terminal device already registers, and the second subnet is a subnet associated with the USN 2. When the terminal device needs to transmit information to the second subnet, the terminal device may send information related to the second subnet to the access network device by using the RRC 1 connection, and add a first temporary identifier, for example, denoted as a USN-UE ID 2, of the terminal device in the second subnet to the information related to the second subnet, or add a third temporary identifier, for example, a UE-RAN-NGAP ID 2 or an RNTI 2, corresponding to the first temporary identifier in the second subnet to the information related to the second subnet. The access network device sends the information related to the second subnet to the first core network element. The first core network element may determine a corresponding fourth temporary identifier UE-NSN-NGAP ID 2 based on the third temporary identifier UE-RAN-NGAP ID 2. Further, the first core network element sends the information that is related to the second subnet and that includes the fourth temporary identifier to the USN 2 associated with the second subnet.

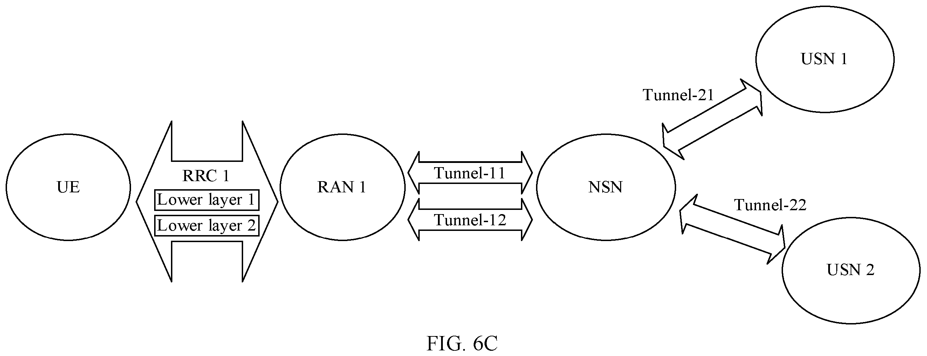

Example 3: When a sublayer is introduced into a protocol stack between the access network device and the terminal device, the terminal device may send information related to a plurality of subnets on a same air interface resource (e.g. a RRC connection). As shown in FIG. 6C, for example, the first core network element in the UCN is an NSN network element, N2 is 2, and the second core network element includes a USN 1 and a USN 2. One air interface resource (namely, an RRC 1 connection) is established between the terminal device (e.g. a UE) and the access network device (e.g. a RAN), but two communication links are established at a sublayer of an RRC layer, and are denoted as a lower layer (lower layer) 1 and a lower layer 2. Two communication links are established between the RAN and the NSN network element, and are denoted as a tunnel-11 and a tunnel-12. Two communication links are established between the NSN network element and the two USN network elements, and are denoted as a tunnel-21 and a tunnel-22. There is an independent communication path between the terminal device and each of the N2 subnets. Based on this, for example, the second subnet represents a subnet with which the terminal device already registers, and the second subnet is a subnet associated with the USN 2. When the terminal device needs to transmit information to the second subnet, the terminal device may determine a corresponding air interface resource by using a first temporary identifier in the second subnet. The terminal device sends information related to the second subnet to the access network device on the air interface resource (e.g. a RRC 1 connection), where the information is divided, by using a sublayer of the RRC 1 connection, into a lower layer 1 and a lower layer 2 for offloading transmission. The access network device may determine the tunnel-12 corresponding to the RRC 1 connection, and send the information related to the second subnet to the NSN network element on the tunnel-12. Further, the NSN network element may determine the tunnel-22 corresponding to the tunnel-12, and send the information related to the second subnet to the USN 2 on the tunnel-22.

### Solution 2:

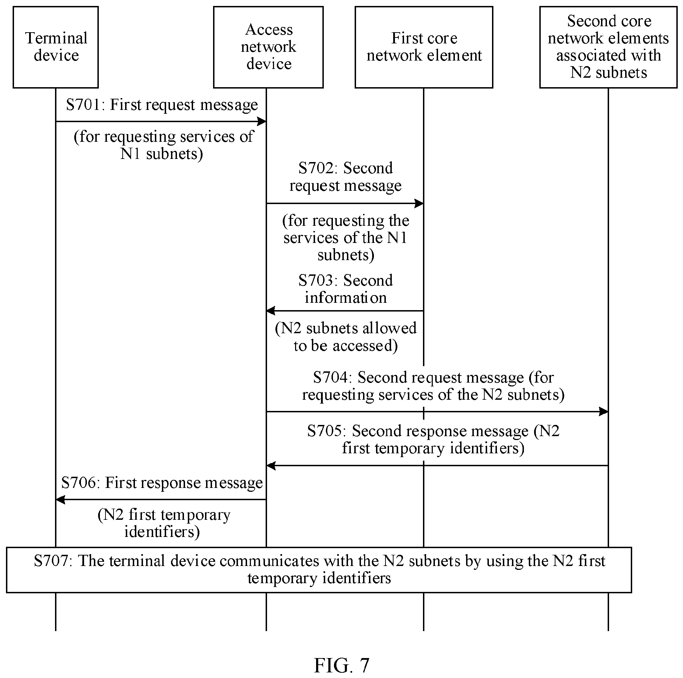

FIG. 7 shows a communication method. The communication method mainly includes the following procedure.

S701: A terminal device sends a first request message to an access network device, where the first request message is used to request to serve the terminal device in N1 subnets of a core network, and N1 is a positive integer greater than 1.

The core network may be a core network in a UCN, and one subnet in the core network is associated with one USN network element. It may be understood that the first request message requests to serve the terminal device in subnets associated with a plurality of USNs. In this embodiment of this application, that the terminal device is served in the subnet may be registration of the terminal device in the subnet, a service connection of the terminal device in the subnet, or the like.

For details, refer to S401 for implementation.

S702: The access network device sends a second request message to a first core network element based on the first request message, where the second request message is used to request to serve the terminal device in the N1 subnets of the core network, and the second request message includes configuration information of each of the N1 subnets.

For details, refer to S402 for implementation.

S703: The first core network element sends second information to the access network device, where the second information indicates that the terminal device is allowed to be served in the N2 subnets of the core network.

The second information includes configuration information of the N2 subnets.

Specifically, the first core network element may obtain subscription information of the terminal device from a system or a core network element that stores the subscription information of the terminal device. For example, the first core network element obtains, based on identification information of the terminal device (for example, a SUPI or the second temporary identifier that is in the subnet and that is mentioned in S401), subscription information corresponding to the identification information of the terminal device from the system or the core network element that stores the subscription information of the terminal device. Further, the first core network element may determine, based on the subscription information of the terminal device, whether the N1 subnets correspondingly requested in the first request message are allowed to be accessed by the terminal device.

For a relationship between the N1 subnets and the N2 subnets, refer to the following possible manner for understanding: In a first possible manner, if some or all of the N1 subnets are allowed to be accessed by the terminal device, the N2 subnets are included in the N1 subnets, and N2 ≤ N1. In a second possible manner, if some subnets in the N1 subnets are allowed to be accessed by the terminal device, the N2 subnets may include the some subnets in the N1 subnets and other subnets. The first core network element may independently determine based on the subscription information of the terminal device, the other subnets that can be accessed by the terminal device. Optionally, a quantity of the other subnets may be N1 to N2 or another value. This is not limited in this embodiment of this application. In a third possible manner, if none of the N1 subnets are allowed to be accessed by the terminal device, the first core network element may independently determine based on the subscription information of the terminal device, the N2 subnets that can be accessed by the terminal device. There is no overlapping subnet between the N2 subnets and the N1 subnets. In conclusion, when the first core network element determines that there is a subnet that cannot provide a service in the N1 subnets requested by the terminal device, the first core network element may independently determine for the terminal device, a subnet that is requested and that provides a service.

S704: The access network device sends the second request message to second core network elements associated with the N2 subnets.

The second request message is used to request to separately serve the terminal device in the N2 subnets, or this is described as follows: The second request message is used to request, from a second core network element associated with an i^{th} subnet in the N2 subnets, to serve the terminal device in the i^{th} subnet. N2 is a positive integer, and i is a positive integer from 1 to N2. Specifically, when this solution 2 is applied to the UCN. The second core network element may be a USN, different subnets are associated with different USNs, and the i^{th} subnet in the N2 subnets is associated with an i^{th} second core network element (e.g. a USN).

Specifically, the second request message may correspond to N2 pieces of seventh signaling, and the access network device may request a service of the i^{th} subnet from the i^{th} second core network element (e.g. a USN) by using an i^{th} piece of seventh signaling in the N2 pieces of seventh signaling.

Optionally, when the second request message includes the N2 pieces of seventh signaling, different seventh signaling may be transmitted on different communication links (e.g. tunnels), in other words, different seventh signaling has different carriers. In a possible manner, the access network device may establish an i^{th} third communication link with the i^{th} second core network element associated with the i^{th} subnet, and the access network device sends the i^{th} piece of seventh signaling on the i^{th} third communication link, where the i^{th} piece of seventh signaling may include identification information of the i^{th} third communication link. For example, the identification information of the communication link of the i^{th} piece of seventh signaling may include a port identifier that is in the access network device and that is used to send the i^{th} piece of seventh signaling, and different third communication links correspond to different port identifiers.

Optionally, the access network device may allocate a temporary identifier in the access network device to the terminal device. For ease of differentiation, the temporary identifier of the terminal device in the access network device is described as a third temporary identifier below. There are one or more third temporary identifiers. For example, the access network device may allocate N2 third temporary identifiers to the terminal device, where the N2 third temporary identifiers are in one-to-one correspondence with the N2 subnets. Based on this, the access network device may include the N2 third temporary identifiers in the second request message. For example, when the second request message includes the N2 pieces of seventh signaling, the i^{th} piece of seventh signaling in the N2 pieces of seventh signaling may include an i^{th} third temporary identifier. In an example, the i^{th} third temporary identifier of the terminal device in the access network device may also be denoted as a UE-RAN-NGAP ID (i) in the UCN.

Further, the access network device may further send related information of the access network device to the second core network elements associated with the N2 subnets. It may be understood that the related information of the access network device may include an identifier of the access network device, port information of the access network device, and the like.

S705: The access network device obtains a second response message from the second core network elements associated with the N2 subnets.

The second response message indicates that the terminal device is served in the N2 subnets. The second core network elements associated with the N2 subnets may allocate temporary identifiers, denoted as first temporary identifiers, to the terminal device in the N2 subnets. The second response message includes a first temporary identifier of the terminal device in each of the N2 subnets, and there are a total of N2 first temporary identifiers. It may be understood that, for a subnet included in both the N2 subnets and the N1 subnets, a first temporary identifier of the terminal device in the subnet is the same as a second temporary identifier of the terminal device in the subnet, or a first temporary identifier of the terminal device in the subnet is reallocated and is different from a second temporary identifier of the terminal device in the subnet.

Specifically, the second response message corresponds to the second request message described in S704. When the second request message includes the N2 pieces of seventh signaling, the second response message includes N2 pieces of eighth signaling, an i^{th} piece of eighth signaling in the N2 pieces of eighth signaling corresponds to the i^{th} subnet in the N2 subnets, and the second core network element associated with the i^{th} subnet sends the i^{th} piece of eighth signaling to the access network device, where the i^{th} piece of eighth signaling indicates that the terminal device is served in the i^{th} subnet. For example, in the UCN, the second core network elements associated with the N2 subnets include N2 USN network elements, the second request message sent by the access network device to the N2 USN network elements includes the N2 pieces of seventh signaling, and the access network device sends the i^{th} piece of seventh signaling in the N2 pieces of seventh signaling to an i^{th} USN network element in the N2 USN network elements. In this case, the i^{th} USN network element in the N2 USN network elements sends the i^{th} piece of eighth signaling in the N2 pieces of eighth signaling to the access network device.

Specifically, the i^{th} piece of eighth signaling includes the i^{th} first temporary identifier in the N2 first temporary identifiers, or this is described as follows: The i^{th} piece of eighth signaling in the N2 pieces of eighth signaling includes the first temporary identifier of the terminal device in the i^{th} subnet. In an example, the i^{th} first temporary identifier may also be denoted as a USN-UE ID (i) in the UCN.

Optionally, different eighth signaling may be transmitted on different communication links (tunnels), in other words, different eighth signaling has different carriers. In a possible manner, corresponding to N2 third communication links between the access network device and the second core network elements associated with the N2 subnets, the second core network element associated with the i^{th} subnet sends the i^{th} piece of eighth signaling, where the i^{th} piece of eighth signaling may include identification information of a third communication link used to transmit the i^{th} piece of eighth signaling, for example, a port identifier in the second core network element associated with the i^{th} subnet, and a port identifier that is in the access network device and that is used to transmit the i^{th} piece of eighth signaling. Different eighth signaling corresponds to different port identifiers. In such a design, when the access network device communicates with the second core network element, transmission is performed based on different communication links, so that both the communication parties can identify information related to a specified subnet.

Optionally, when the second request message includes the N2 third temporary identifiers, the second core network elements associated with the N2 subnets may construct a mapping relationship between the N2 first temporary identifiers and the N2 third temporary identifiers, or construct a mapping relationship between the N2 first temporary identifiers, the N2 third temporary identifiers, and the N2 subnets. For example, the i^{th} first temporary identifier in the N2 first temporary identifiers corresponds to the i^{th} third temporary identifier in the N2 third temporary identifiers. Based on this, after obtaining the N2 first temporary identifiers, the access network device also constructs, in a same manner, the mapping relationship between the N2 first temporary identifiers and the N2 third temporary identifiers, or the mapping relationship between the N2 first temporary identifiers, the N2 third temporary identifiers, and the N2 subnets. In such a design, when the access network device communicates with the second core network element, both the communication parties may identify information related to a specified subnet based on the first temporary identifier or the third temporary identifier.

S706: The access network device sends a first response message to the terminal device based on the second response message, where the first response message indicates that the terminal device is served in the N2 subnets, and the first response message includes the first temporary identifier of the terminal device in each of the N2 subnets.

Specifically, the first response message may be one piece of sixth signaling. For example, the sixth signaling is RRC signaling. The access network device indicates, in one piece of RRC signaling, that the terminal device is served in the N2 subnets. Alternatively, the first response message may include N2 pieces of sixth signaling. For example, the sixth signaling is RRC signaling. The access network device indicates, in an i^{th} piece of sixth signaling in the N2 pieces of RRC signaling, that the terminal device is served in the i^{th} subnet in the N2 subnets. For a manner in which the access network device sends the first response message to the terminal device, refer to S405 for implementation.

Optionally, when different sixth signaling in the N2 pieces of sixth signaling is transmitted on different air interface resources, the access network device may obtain, through the first core network element from a core network element configured to store the subscription information of the terminal device, bandwidth information (for example, an AMBR parameter) that can be used by the terminal device in a network. Further, the access network device may determine, based on the AMBR parameter of the terminal device, an MBR parameter corresponding to the terminal device in each of the N2 subnets, and determine configuration information of each air interface resource in the N2 air interface resources. The configuration information of the air interface resource includes one or more of the following: quality of service information, bandwidth information, scheduling priority information, a time-frequency resource, antenna port information, or polarization information.

S707: The terminal device communicates with the N2 subnets by using the N2 first temporary identifiers.

Specifically, the terminal device may send information related to the i^{th} subnet to the access network device on a related air interface resource based on the i^{th} first temporary identifier in the N2 first temporary identifiers, to further communicate with the i^{th} subnet by using the access network device. It may be understood that the terminal device communicates with the N2 subnets by using the N2 first temporary identifiers includes: The terminal device sends, by using the i^{th} first temporary identifier through the access network device, the information related to the i^{th} subnet to the second core network element associated with the i^{th} subnet. Alternatively, the terminal device sends, by using the i^{th} first temporary identifier through the access network device, the information related to the i^{th} subnet to the core network element deployed in the i^{th} subnet.

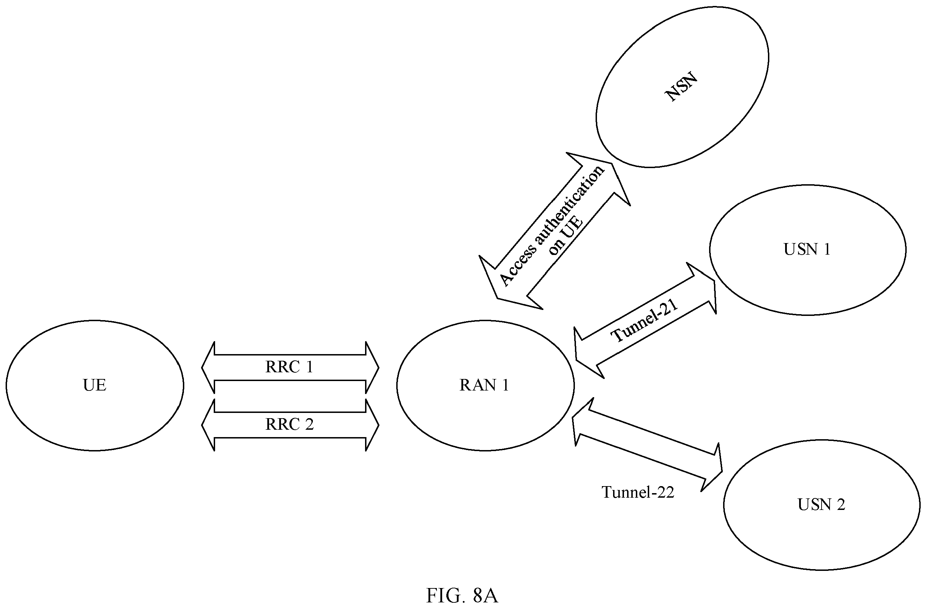

With reference to FIG. 8A to FIG. 8C, the following describes in detail an example in which the terminal device communicates with each subnet after registering with and accessing the N2 subnets.

Example 1: When the N2 air interface resources are established between the terminal device and the access network device, the terminal device may send the information related to the i^{th} subnet on the i^{th} air interface resource based on a mapping relationship between the i^{th} first temporary identifier and identification information of the i^{th} air interface resource. As shown in FIG. 8A, for example, the first core network element in the UCN is an NSN network element, N2 is 2, and the second core network element includes a USN 1 and a USN 2. Two air interface resources (namely, an RRC 1 connection and an RRC 2 connection) are established between the terminal device (UE) and the access network device (RAN). The RAN communicates with the NSN network element, to complete access authentication on the terminal device in the NSN network element. Two communication links are established between the RAN and the two USN network elements, and are denoted as a tunnel-21 and a tunnel-22 There is an independent communication path between the terminal device and each of the N2 subnets. Based on this, for example, a second subnet represents a subnet with which the terminal device already registers, and the second subnet is a subnet associated with the USN 2. When the terminal device needs to transmit information to the second subnet, the terminal device may determine a corresponding air interface resource by using a first temporary identifier in the second subnet. The terminal device sends information related to the second subnet to the access network device on the air interface resource (e.g. a RRC 2 connection). The access network device may determine the tunnel-22 corresponding to the RRC 2 connection, and send the information related to the second subnet to the USN 2 network element on the tunnel-22.

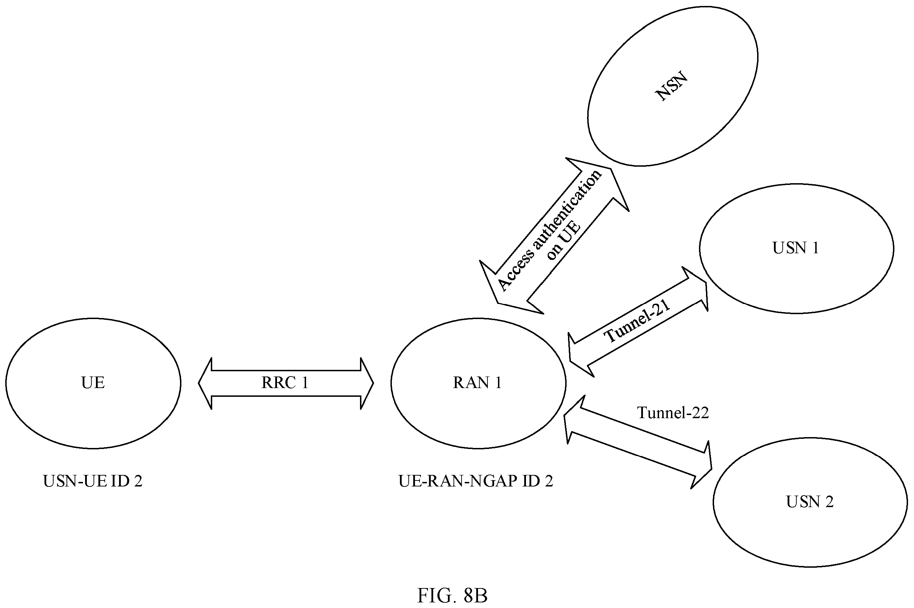

Example 2: When the access network device configures the N2 third temporary identifiers for the terminal device, the terminal device may add, based on the mapping relationship between the i^{th} first temporary identifier and the i^{th} third temporary identifier, the i^{th} third temporary identifier when sending the information related to the i^{th} subnet. As shown in FIG. 8B, for example, the first core network element in the UCN is an NSN network element, N2 is 2, and the second core network element includes a USN 1 and a USN 2 is used. One air interface resource (namely, an RRC 1 connection) is established between the terminal device (UE) and the access network device (RAN). The RAN communicates with the NSN network element, to complete access authentication on the terminal device in the NSN network element. Two communication links are established between the RAN and the two USN network elements, and are denoted as a tunnel-21 and a tunnel-22. Based on this, for example, a second subnet represents a subnet with which the terminal device already registers, and the second subnet is a subnet associated with the USN 2. When the terminal device needs to transmit information to the second subnet, the terminal device may send the information related to the second subnet to the access network device by using the RRC 1 connection, and add a first temporary identifier, for example, denoted as a USN-UE ID 2, of the terminal device in the second subnet to the information related to the second subnet, or add a third temporary identifier, for example, a UE-RAN-NGAP ID 2, corresponding to the first temporary identifier in the second subnet to the information related to the second subnet. The access network device sends the information related to the second subnet to the USN 2 associated with the second subnet.

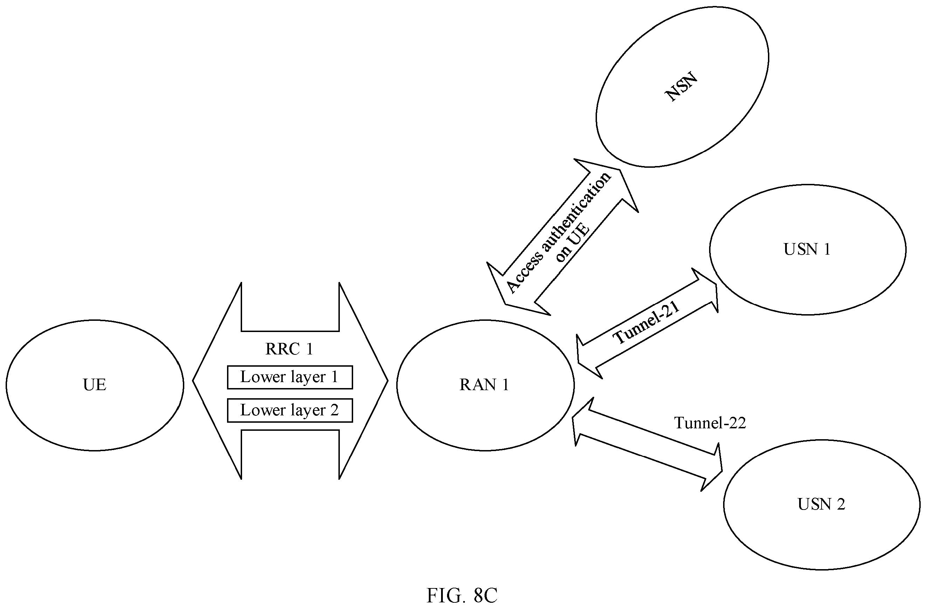

Example 3: When a sublayer is introduced into a protocol stack between the access network device and the terminal device, the terminal device may send information related to a plurality of subnets on a same air interface resource (RRC connection). As shown in FIG. 8C, for example, the first core network element in the UCN is an NSN network element, N2 is 2, and the second core network element includes a USN 1 and a USN 2 is used. One air interface resource (namely, an RRC 1 connection) is established between the terminal device (UE) and the access network device (RAN), but two communication links are established at a sublayer of an RRC layer, and are denoted as a lower layer (lower layer) 1 and a lower layer 2. The RAN communicates with the NSN network element, to complete access authentication on the terminal device in the NSN network element. Two communication links are established between the RAN and the two USN network elements, and are denoted as a tunnel-21 and a tunnel-22. There is an independent communication path between the terminal device and each of the N2 subnets. Based on this, for example, a second subnet represents a subnet with which the terminal device already registers, and the second subnet is a subnet associated with the USN 2. When the terminal device needs to transmit information to the second subnet, the terminal device may determine a corresponding air interface resource by using a first temporary identifier in the second subnet. The terminal device sends information related to the second subnet to the access network device on the air interface resource (e.g. a RRC 1 connection), where the information is divided, by using a sublayer of the RRC 1 connection, into a lower layer 1 and a lower layer 2 for offloading transmission. The access network device may determine the tunnel-22 corresponding to the RRC 2 connection, and send the information related to the second subnet to the USN 2 network element on the tunnel-22.

According to the foregoing solution provided in this embodiment of this application, the terminal device can be simultaneously served in a plurality of subnets, and a temporary identifier of the terminal device is independently configured in each subnet, to implement mapping between an identifier of the terminal device and a network function; and an access and mobility management network element does not need to manage all network functions accessed by the terminal device in a unified manner, so that a network function service procedure can be simplified, thereby improving network flexibility and security.

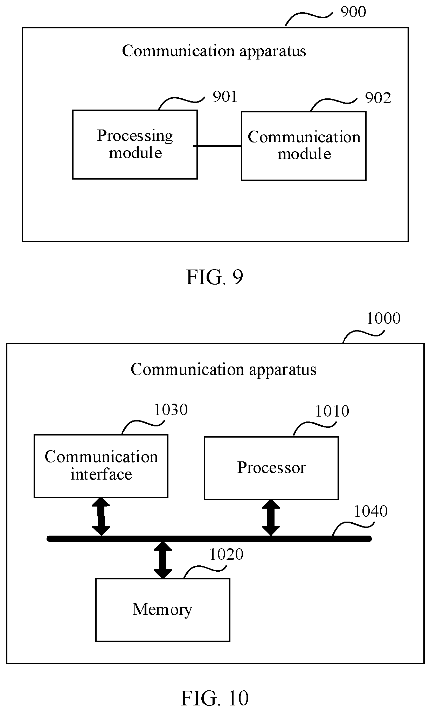

Based on a same concept, refer to FIG. 9. An embodiment of this application provides a communication apparatus 900. The communication apparatus 900 includes a processing module 901 and a communication module 902. The communication apparatus 900 may be a core network element (for example, a first core network element or a second core network element), or may be a communication apparatus that is used in the core network element or used in corporation with the core network element and that can implement a communication method performed on a core network element side. Alternatively, the communication apparatus 900 may be a terminal device, or may be a communication apparatus that is used in the terminal device or used in corporation with the terminal device and that can implement a communication method performed on a terminal device side. Alternatively, the communication apparatus 900 may be an access network device, or may be a communication apparatus that is used in the access network device or used in corporation with the access network device and that can implement a communication method performed on an access network device side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the core network element side or the terminal device side in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 900 is used in the terminal device, the processing module 901 may be configured to implement a processing function of the terminal device in the example in FIG. 4 or FIG. 7, and the communication module 902 may be configured to implement a receiving and sending function of the terminal device in the example in FIG. 4 or FIG. 7. Alternatively, the communication apparatus may be understood with reference to the fourth aspect and the possible designs in the fourth aspect in the summary.

When the communication apparatus 900 is used in the access network device, the processing module 901 may be configured to implement a processing function of the access network device in the example in FIG. 4 or FIG. 7, and the communication module 902 may be configured to implement a receiving and sending function of the access network device in the example in FIG. 4 or FIG. 7. Alternatively, the communication apparatus may be understood with reference to the fifth aspect and the possible designs in the fifth aspect in the summary.

When the communication apparatus 900 is used in the core network element, the processing module 901 may be configured to implement a processing function of the first core network element or the second core network element in the example in FIG. 4 or FIG. 7, and the communication module 902 may be configured to implement a receiving and sending function of the first core network element or the second core network element in the example in FIG. 4 or FIG. 7. Alternatively, the communication apparatus may be understood with reference to the sixth aspect and the possible designs in the sixth aspect in the summary.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using an entity apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this embodiment of this application is an example, is merely logical function division, and may be other division during actual implementation. In addition, functional modules in each example in embodiments of this application may be integrated into one processor, each of the modules may exist alone physically, or two or more modules may be integrated into one module. The integrated module may be implemented in a form of hardware, or may be implemented in a form of a software functional module.

Based on a same technical concept, an embodiment of this application further provides a communication apparatus 1000. For example, the communication apparatus 1000 may be a chip or a chip system. Optionally, in this embodiment of this application, the chip system may include a chip, or may include a chip and another discrete component.

The communication apparatus 1000 may be configured to implement a function of any network element in the communication system described in the foregoing example. The communication apparatus 1000 may include at least one processor 1010. The processor 1010 is coupled to a memory. Optionally, the memory may be located in the apparatus, the memory may be integrated with the processor, or the memory may be located outside the apparatus. For example, the communication apparatus 1000 may further include at least one memory 1020. The memory 1020 stores a computer program, a computer program or instructions, and/or data necessary for implementing any one of the foregoing examples. The processor 1010 may execute the computer program stored in the memory 1020, to complete the method in any one of the foregoing examples.

The communication apparatus 1000 may further include a communication interface 1030, and the communication apparatus 1000 may exchange information with another device through the communication interface 1030. For example, the communication interface 1030 may be a transceiver, a circuit, a bus, a module, a pin, or a communication interface of another type. When the communication apparatus 1000 is a chip-type apparatus or circuit, the communication interface 1030 in the apparatus 1000 may alternatively be an input/output circuit, and may input information (or referred to as receiving information) and output information (or referred to as sending information). The processor is an integrated processor, a microprocessor, an integrated circuit, or a logic circuit, and the processor may determine output information based on input information.

The coupling in this embodiment of this application may be indirect coupling or a communication connection between apparatuses, units, or modules in an electrical form, a mechanical form, or another form, and is used for information exchange between the apparatuses, the units, or the modules. The processor 1010 may operate in collaboration with the memory 1020 and the communication interface 1030. A specific connection medium between the processor 1010, the memory 1020, and the communication interface 1030 is not limited in this embodiment of this application.

Optionally, refer to FIG. 10. The processor 1010, the memory 1020, and the communication interface 1030 are connected to each other through a bus 1040. The bus 1040 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used for representing the bus in FIG. 10, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

In a possible implementation, the communication apparatus 1000 may be used in a terminal device. Specifically, the communication apparatus 1000 may be the terminal device, or may be an apparatus that can support the terminal device in implementing functions of the terminal device in any one of the foregoing examples. The memory 1020 stores a computer program (or instructions) and/or data for implementing the functions of the terminal device in any one of the foregoing examples. The processor 1010 may execute the computer program stored in the memory 1020, to complete the method performed by the terminal device in any one of the foregoing examples. When the communication apparatus 1000 is used in the terminal device, the communication interface in the communication apparatus 1000 may be configured to interact with an access network device, and send information to the access network device or receive information from the access network device.

In another possible implementation, the communication apparatus 1000 may be used in a core network element. Specifically, the communication apparatus 1000 may be the core network element, or may be an apparatus that can support the core network element in implementing functions of the core network element in any one of the foregoing examples. The memory 1020 stores a computer program (or instructions) and/or data for implementing the functions of the core network element in any one of the foregoing examples. The processor 1010 may execute the computer program stored in the memory 1020, to complete the method performed by the core network element in any one of the foregoing examples. When the communication apparatus 1000 is used in the core network element, the communication interface in the communication apparatus 1000 may be configured to interact with an access network device, and send information to the access network device or receive information from the access network device.

The communication apparatus 1000 provided in this example may be used in the terminal device to complete the method performed by the terminal device, used in the access network device to complete the method performed by the access network device, or used in the core network element to complete the method performed by the core network element. Therefore, for technical effects that can be achieved by the communication apparatus 1000, refer to the foregoing method examples.

The technical solutions provided in this embodiment of this application may be fully or partially implemented through software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In embodiments of this application, on the premise that there is no logical conflict, examples may be mutually referenced. For example, methods and/or terms in the method embodiments may be mutually referenced. For example, functions and/or terms in the apparatus embodiments may be mutually referenced. For example, functions and/or terms in the apparatus examples and the method examples may be mutually referenced.

Apparently, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A communication method, comprising:
sending (S401), by a terminal, a first request message, wherein the first request message is used to request to serve the terminal in N1 subnets of a core network, the first request message comprises configuration information of each of the N1 subnets, and N1 is a positive integer greater than 1; and
obtaining (S405), by the terminal, a first response message, wherein the first response message indicates that the terminal is served in N2 subnets, the N2 subnets comprise some or all of the N1 subnets, N2 is a positive integer less than or equal to N1, and the first response message comprises a first temporary identifier of the terminal in each of the N2 subnets, wherein first temporary identifiers of the terminal in at least two of the N2 subnets are different.

2. The method according to claim 1, wherein configuration information of a j^{th} subnet in the N1 subnets comprises one or more of the following: a service type of the j^{th} subnet, an identifier of the j^{th} subnet, an address of the j^{th} subnet, an address of a network element that provides a service for the terminal in the j^{th} subnet, and a second temporary identifier of the terminal in the j^{th} subnet, wherein j is a positive integer from 1 to N1.

3. The method according to claim 2, wherein if the N1 subnets and the N2 subnets each comprise a first subnet, a first temporary identifier of the terminal in the first subnet is the same as a second temporary identifier of the terminal in the first subnet.

4. The method according to any one of claims 1 to 3, comprising:
obtaining, by the terminal first mapping configuration information, wherein the first mapping configuration information indicates a mapping relationship between N2 first temporary identifiers and N2 air interface resources; and
sending, by the terminal information related to an i^{th} subnet in the N2 subnets to an access network device on an air interface resource corresponding to an i^{th} first temporary identifier in the N2 first temporary identifiers, wherein i is a positive integer from 1 to N2.

5. The method according to claim 4, comprising:
obtaining, by the terminal, configuration information of each air interface resource in the N2 air interface resources, wherein the configuration information of the air interface resource comprises one or more of the following: quality of service information, bandwidth information, scheduling priority information, a time-frequency resource, antenna port information, and polarization information.

6. The method according to any one of claims 1 to 3, comprising:
obtaining, by the terminal second mapping configuration information, wherein the second mapping configuration information indicates a mapping relationship between N2 first temporary identifiers and N2 third temporary identifiers of the terminal in an access network device; and
sending, by the terminal information related to an i^{th} subnet in the N2 subnets to the access network device by using an i^{th} third temporary identifier in the N2 third temporary identifiers, wherein i is a positive integer from 1 to N2.

7. A communication method, comprising:
obtaining (S401), by a second communication apparatus, a first request message from a terminal , wherein the first request message is used to request to serve the terminal in N1 subnets of a core network, the first request message comprises configuration information of each of the N1 subnets, and N1 is a positive integer greater than 1;
sending (S402), by the second communication apparatus, a second request message to a first core network element based on the first request message, wherein the second request message is used to request to serve the terminal in the N1 subnets of the core network, and the second request message comprises the configuration information of each of the N1 subnets;
obtaining (S404), by the second communication apparatus, a second response message, wherein the second response message indicates that the terminal is served in N2 subnets, the N2 subnets comprise some or all of the N1 subnets, N2 is a positive integer less than or equal to N1, and the second response message comprises a first temporary identifier of the terminal in each of the N2 subnets; and
sending (S405), by the second communication apparatus, a first response message to the terminal based on the second response message, wherein the first response message indicates that the terminal is served in the N2 subnets, and the first response message comprises the first temporary identifier of the terminal in each of the N2 subnets, wherein first temporary identifiers of the terminal in at least two of the N2 subnets are different.

8. The method according to claim 7, wherein configuration information of a j^{th} subnet in the N1 subnets comprises one or more of the following: a service type of the j^{th} subnet, an identifier of the j^{th} subnet, an address of the j^{th} subnet, an address of a network element that provides a service for the terminal in the j^{th} subnet, and a second temporary identifier of the terminal in the j^{th} subnet, wherein j is a positive integer from 1 to N1.

9. The method according to claim 8, wherein the second request message comprises configuration information of the second communication apparatus, and the configuration information of the second communication apparatus comprises one or more of the following: an identifier of the second communication apparatus, port information of the second communication apparatus, and a temporary identifier of the terminal in the second communication apparatus.

10. The method according to any one of claims 7 to 9, wherein before the obtaining, by the second communication apparatus, a second response message, the method comprises:
obtaining, by the second communication apparatus, second information from the first core network element, wherein the second information indicates that the terminal is allowed to be served in the N2 subnets of the core network, the second information comprises configuration information of the N2 subnets, the N2 subnets comprise some or all of the N1 subnets, and N2 is a positive integer; and
requesting, by the second communication apparatus based on configuration information of an i^{th} subnet in the N2 subnets, a second core network element associated with the i^{th} subnet to serve the terminal in the i^{th} subnet.

11. The method according to any one of claims 7 to 10, comprising:
obtaining, by the second communication apparatus by using a specified air interface resource, information that is related to a second subnet and that is sent by the terminal, wherein the second subnet is a subnet with which the terminal already registers; and
sending, by the second communication apparatus through a first communication link corresponding to the specified air interface resource, the information related to the second subnet to a second core network element associated with the second subnet, wherein the second communication apparatus stores a mapping relationship between a plurality of air interface resources and a plurality of first communication links.

12. The method according to claim 11, comprising:
obtaining, by the second communication apparatus, configuration information of each air interface resource in the plurality of air interface resources from the core network, wherein the configuration information of the air interface resource comprises one or more of the following: quality of service information, bandwidth information, scheduling priority information, a time-frequency resource, antenna port information, and polarization information.

13. The method according to any one of claims 7 to 10, comprising:
obtaining, by the second communication apparatus, information that is related to a second subnet and that is sent by the terminal , wherein the information comprises a first temporary identifier of the terminal in the second subnet, and the second subnet is a subnet with which the terminal already registers; and
sending, by the second communication apparatus by using a third temporary identifier corresponding to the first temporary identifier, the information related to the second subnet to a second core network element associated with the second subnet, wherein the third temporary identifier is a temporary identifier of the terminal in the second communication apparatus, and the second communication apparatus stores a mapping relationship between the third temporary identifier and the first temporary identifier.

14. A communication apparatus, configured to implement the method according to any one of claims 1 to 13.

15. A computer program product, comprising instructions, wherein when the instructions are run on a computer, the computer is enabled to perform the method according to any one of claims 1 to 6, or the method according to any one of claims 7 to 13.

## Patentansprüche

1. Kommunikationsverfahren, das umfasst:
Senden (S401), durch ein Endgerät, einer ersten Anforderungsnachricht, wobei die erste Anforderungsnachricht verwendet wird, um anzufordern, das Endgerät in N1 Teilnetzen eines Kernnetzes zu bedienen, die erste Anforderungsnachricht Konfigurationsinformationen jedes der N1 Teilnetze umfasst, und N1 eine positive ganze Zahl größer als 1 ist; und
Erhalten (S405), durch das Endgerät, einer ersten Antwortnachricht, wobei die erste Antwortnachricht angibt, dass das Endgerät in N2 Teilnetzen bedient wird, die N2 Teilnetze einige oder alle der N1 Teilnetze umfassen, N2 eine positive ganze Zahl kleiner als oder gleich N1 ist, und die erste Antwortnachricht eine erste temporäre Kennung des Endgeräts in jedem der N2 Teilnetze umfasst, wobei erste temporäre Kennungen des Endgeräts in mindestens zwei der N2 Teilnetze unterschiedlich sind.

2. Verfahren nach Anspruch 1, wobei Konfigurationsinformationen eines j-ten Teilnetzes in den N1 Teilnetzen eines oder mehrere der Folgenden umfassen: einen Diensttyp des j-ten Teilnetzes, eine Kennung des j-ten Teilnetzes, eine Adresse des j-ten Teilnetzes, eine Adresse eines Netzelements, das einen Dienst für das Endgerät in dem j-ten Teilnetz bereitstellt, und eine zweite temporäre Kennung des Endgeräts in dem j-ten Teilnetz, wobei j eine positive ganze Zahl von 1 bis N1 ist.

3. Verfahren nach Anspruch 2, wobei, falls die N1 Teilnetze und die N2 Teilnetze jeweils ein erstes Teilnetz umfassen, eine erste temporäre Kennung des Endgeräts in dem ersten Teilnetz gleich einer zweiten temporären Kennung des Endgeräts in dem ersten Teilnetz ist.

4. Verfahren nach einem der Ansprüche 1 bis 3, das umfasst:
Erhalten, durch das Endgerät, erster Zuordnungskonfigurationsinformationen, wobei die ersten Zuordnungskonfigurationsinformationen eine Zuordnungsbeziehung zwischen N2 ersten temporären Kennungen und N2 Luftgrenzflächenressourcen angeben; und
Senden, durch das Endgerät, von Informationen bezüglich eines i-ten Teilnetzes in den N2 Teilnetzen an eine Zugangsnetzvorrichtung auf einer Luftgrenzflächenressource, die einer i-ten ersten temporären Kennung in den N2 ersten temporären Kennungen entspricht, wobei i eine positive ganze Zahl von 1 bis N2 ist.

5. Verfahren nach Anspruch 4, das umfasst:
Erhalten, durch das Endgerät, von Konfigurationsinformationen jeder Luftgrenzflächenressource in den N2 Luftgrenzflächenressourcen, wobei die Konfigurationsinformationen der Luftgrenzflächenressource eines oder mehrere der Folgenden umfassen: Dienstgüteinformationen, Bandbreiteninformationen, Planungsprioritätsinformationen, eine Zeit-Frequenz-Ressource, Antennenportinformationen und Polarisationsinformationen.

6. Verfahren nach einem der Ansprüche 1 bis 3, das umfasst:
Erhalten, durch das Endgerät, zweiter Zuordnungskonfigurationsinformationen, wobei die zweiten Zuordnungskonfigurationsinformationen eine Zuordnungsbeziehung zwischen N2 ersten temporären Kennungen und N2 dritten temporären Kennungen des Endgeräts in einer Zugangsnetzvorrichtung angeben; und
Senden, durch das Endgerät, von Informationen bezüglich eines i-ten Teilnetzes in den N2 Teilnetzen an die Zugangsnetzvorrichtung durch Verwenden einer i-ten dritten temporären Kennung in den N2 dritten temporären Kennungen, wobei i eine positive ganze Zahl von 1 bis N2 ist.

7. Kommunikationsverfahren, das umfasst:
Erhalten (S401), durch eine zweite Kommunikationsvorrichtung, einer ersten Anforderungsnachricht von einem Endgerät, wobei die erste Anforderungsnachricht verwendet wird, um anzufordern, das Endgerät in N1 Teilnetzen eines Kernnetzes zu bedienen, die erste Anforderungsnachricht Konfigurationsinformationen jedes der N1 Teilnetze umfasst, und N1 eine positive ganze Zahl größer als 1 ist;
Senden (S402), durch die zweite Kommunikationsvorrichtung, einer zweiten Anforderungsnachricht an ein erstes Kernnetzelement basierend auf der ersten Anforderungsnachricht, wobei die zweite Anforderungsnachricht verwendet wird, um anzufordern, das Endgerät in den N1 Teilnetzen des Kernnetzes zu bedienen, und die zweite Anforderungsnachricht die Konfigurationsinformationen jedes der N1 Teilnetze umfasst;
Erhalten (S404), durch die zweite Kommunikationsvorrichtung, einer zweiten Antwortnachricht, wobei die zweite Antwortnachricht angibt, dass das Endgerät in N2 Teilnetzen bedient wird, die N2 Teilnetze einige oder alle der N1 Teilnetze umfassen, N2 eine positive ganze Zahl kleiner als oder gleich N1 ist, und die zweite Antwortnachricht eine erste temporäre Kennung des Endgeräts in jedem der N2 Teilnetze umfasst;
und
Senden (S405), durch die zweite Kommunikationsvorrichtung, einer ersten Antwortnachricht an das Endgerät basierend auf der zweiten Antwortnachricht, wobei die erste Antwortnachricht angibt, dass das Endgerät in den N2 Teilnetzen bedient wird, und die erste Antwortnachricht die erste temporäre Kennung des Endgeräts in jedem der N2 Teilnetze umfasst, wobei erste temporäre Kennungen des Endgeräts in mindestens zwei der N2 Teilnetze unterschiedlich sind.

8. Verfahren nach Anspruch 7, wobei Konfigurationsinformationen eines j-ten Teilnetzes in den N1 Teilnetzen eines oder mehrere der Folgenden umfassen: einen Diensttyp des j-ten Teilnetzes, eine Kennung des j-ten Teilnetzes, eine Adresse des j-ten Teilnetzes, eine Adresse eines Netzelements, das einen Dienst für das Endgerät in dem j-ten Teilnetz bereitstellt, und eine zweite temporäre Kennung des Endgeräts in dem j-ten Teilnetz, wobei j eine positive ganze Zahl von 1 bis N1 ist.

9. Verfahren nach Anspruch 8, wobei die zweite Anforderungsnachricht Konfigurationsinformationen der zweiten Kommunikationsvorrichtung umfasst, und die Konfigurationsinformationen der zweiten Kommunikationsvorrichtung eines oder mehrere der Folgenden umfassen: eine Kennung der zweiten Kommunikationsvorrichtung, Portinformationen der zweiten Kommunikationsvorrichtung und eine temporäre Kennung des Endgeräts in der zweiten Kommunikationsvorrichtung.

10. Verfahren nach einem der Ansprüche 7 bis 9, wobei vor dem Erhalten, durch die zweite Kommunikationseinrichtung, einer zweiten Antwortnachricht, das Verfahren umfasst:
Erhalten, durch die zweite Kommunikationsvorrichtung, zweiter Informationen von dem ersten Kernnetzelement, wobei die zweiten Informationen angeben, dass das Endgerät in den N2 Teilnetzen des Kernnetzes bedient werden darf, die zweiten Informationen Konfigurationsinformationen der N2 Teilnetze umfassen, die N2 Teilnetze einige oder alle der N1 Teilnetze umfassen und N2 eine positive ganze Zahl ist; und
Anfordern, durch die zweite Kommunikationsvorrichtung basierend auf Konfigurationsinformationen eines i-ten Teilnetzes in den N2 Teilnetzen, eines zweiten Kernnetzelements, das dem i-ten Teilnetz zugeordnet ist, um das Endgerät in dem i-ten Teilnetz zu bedienen.

11. Verfahren nach einem der Ansprüche 7 bis 10, das umfasst:
Erhalten, durch die zweite Kommunikationsvorrichtung durch Verwenden einer spezifizierten Luftgrenzflächenressource, von Informationen, die sich auf ein zweites Teilnetz beziehen und die durch das Endgerät gesendet werden, wobei das zweite Teilnetz ein Teilnetz ist, bei dem sich das Endgerät bereits registriert; und
Senden, durch die zweite Kommunikationsvorrichtung über eine erste Kommunikationsverbindung, die der spezifizierten Luftgrenzflächenressource entspricht, der Informationen, die sich auf das zweite Teilnetz beziehen, an ein zweites Kernnetzelement, das mit dem zweiten Teilnetz assoziiert ist, wobei die zweite Kommunikationsvorrichtung eine Zuordnungsbeziehung zwischen einer Vielzahl von Luftgrenzflächenressourcen und einer Vielzahl von ersten Kommunikationsverbindungen speichert.

12. Verfahren nach Anspruch 11, das umfasst:
Erhalten, durch die zweite Kommunikationsvorrichtung, von Konfigurationsinformationen jeder Luftgrenzflächenressource in der Vielzahl von Luftgrenzflächenressourcen von dem Kernnetz, wobei die Konfigurationsinformationen der Luftgrenzflächenressource eines oder mehrere der Folgenden umfassen: Dienstgüteinformationen, Bandbreiteninformationen, Planungsprioritätsinformationen, eine Zeit-Frequenz-Ressource, Antennenportinformationen und Polarisationsinformationen.

13. Verfahren nach einem der Ansprüche 7 bis 10, das umfasst:
Erhalten, durch die zweite Kommunikationsvorrichtung, von Informationen, die sich auf ein zweites Teilnetz beziehen und die durch das Endgerät gesendet werden, wobei die Informationen eine erste temporäre Kennung des Endgeräts in dem zweiten Teilnetz umfassen und das zweite Teilnetz ein Teilnetz, bei dem sich das Endgerät bereits registriert, ist; und
Senden, durch die zweite Kommunikationsvorrichtung durch Verwenden einer dritten temporären Kennung, die der ersten temporären Kennung entspricht, der Informationen bezüglich des zweiten Teilnetzes an ein zweites Kernnetzelement, das mit dem zweiten Teilnetz assoziiert ist, wobei die dritte temporäre Kennung eine temporäre Kennung des Endgeräts in der zweiten Kommunikationsvorrichtung ist und die zweite Kommunikationsvorrichtung eine Zuordnungsbeziehung zwischen der dritten temporären Kennung und der ersten temporären Kennung speichert.

14. Kommunikationseinrichtung, die konfiguriert ist, um das Verfahren nach einem der Ansprüche 1 bis 13 zu implementieren.

15. Computerprogrammprodukt, das Anweisungen umfasst, wobei, wenn die Anweisungen auf einem Computer ausgeführt werden, der Computer aktiviert wird, um das Verfahren nach einem der Ansprüche 1 bis 6 oder das Verfahren nach einem der Ansprüche 7 bis 13 durchzuführen.

## Revendications

1. Procédé de communication, comprenant :
l'envoi (S401), par un terminal, d'un premier message de demande, dans lequel le premier message de demande est utilisé pour demander à desservir le terminal dans N1 sous-réseaux d'un réseau central, le premier message de demande comprend des informations de configuration de chacun des N1 sous-réseaux, et N1 est un entier positif supérieur à 1 ; et
l'obtention (S405), par le terminal, d'un premier message de réponse, dans lequel le premier message de réponse indique que le terminal est desservi dans N2 sous-réseaux, les N2 sous-réseaux comprennent tout ou partie des N1 sous-réseaux, N2 est un entier positif inférieur ou égal à N1, et le premier message de réponse comprend un premier identifiant temporaire du terminal dans chacun des N2 sous-réseaux, dans lequel des premiers identifiants temporaires du terminal dans au moins deux des N2 sous-réseaux sont différents.

2. Procédé selon la revendication 1, dans lequel des informations de configuration d'un j^{ième} sous-réseau dans les N1 sous-réseaux comprennent un ou plusieurs des éléments suivants : un type de service du j^{ième} sous-réseau, un identifiant du j^{ième} sous-réseau, une adresse du j^{ième} sous-réseau, une adresse d'un élément de réseau qui fournit un service au terminal dans le j^{ième} sous-réseau, et un deuxième identifiant temporaire du terminal dans le j^{ième} sous-réseau, dans lequel j est un entier positif allant de 1 à N1.

3. Procédé selon la revendication 2, dans lequel, si les N1 sous-réseaux et les N2 sous-réseaux comprennent chacun un premier sous-réseau, un premier identifiant temporaire du terminal dans le premier sous-réseau est le même qu'un deuxième identifiant temporaire du terminal dans le premier sous-réseau.

4. Procédé selon l'une quelconque des revendications 1 à 3, comprenant :
l'obtention, par le terminal, de premières informations de configuration de mise en correspondance, dans lequel les premières informations de configuration de mise en correspondance indiquent une relation de mise en correspondance entre N2 premiers identifiants temporaires et N2 ressources d'interface hertzienne ; et
l'envoi, par le terminal, d'informations relatives à un i^{ième} sous-réseau dans les N2 sous-réseaux à un dispositif de réseau d'accès sur une ressource d'interface hertzienne correspondant à un i^{ième} premier identifiant temporaire dans les N2 premiers identifiants temporaires, dans lequel i est un entier positif allant de 1 à N2.

5. Procédé selon la revendication 4, comprenant :
l'obtention, par le terminal, d'informations de configuration de chaque ressource d'interface hertzienne dans les N2 ressources d'interface hertzienne, dans lequel les informations de configuration de la ressource d'interface hertzienne comprennent un ou plusieurs des éléments suivants : des informations de qualité de service, des informations de largeur de bande, des informations de priorité de planification, une ressource temps-fréquence, des informations de port d'antenne et des informations de polarisation.

6. Procédé selon l'une quelconque des revendications 1 à 3, comprenant :
l'obtention, par le terminal, de secondes informations de configuration de mise en correspondance, dans lequel les secondes informations de configuration de mise en correspondance indiquent une relation de mise en correspondance entre N2 premiers identifiants temporaires et N2 troisièmes identifiants temporaires du terminal dans un dispositif de réseau d'accès ; et
l'envoi, par le terminal, d'informations relatives à un i^{ième} sous-réseau dans les N2 sous-réseaux au dispositif de réseau d'accès en utilisant un i^{ième} troisième identifiant temporaire dans les N2 troisièmes identifiants temporaires, dans lequel i est un entier positif allant de 1 à N2.

7. Procédé de communication, comprenant :
l'obtention (S401), par un second appareil de communication, d'un premier message de demande auprès d'un terminal, dans lequel le premier message de demande est utilisé pour demander à desservir le terminal dans N1 sous-réseaux d'un réseau central, le premier message de demande comprend des informations de configuration de chacun des N1 sous-réseaux, et N1 est un entier positif supérieur à 1 ;
l'envoi (S402), par le second appareil de communication, d'un second message de demande à un premier élément de réseau central sur la base du premier message de demande, dans lequel le second message de demande est utilisé pour demander à desservir le terminal dans les N1 sous-réseaux du réseau central, et le second message de demande comprend les informations de configuration de chacun des N1 sous-réseaux ;
l'obtention (S404), par le second appareil de communication, d'un second message de réponse, dans lequel le second message de réponse indique que le terminal est desservi dans N2 sous-réseaux, les N2 sous-réseaux comprennent tout ou partie des N1 sous-réseaux, N2 est un entier positif inférieur ou égal à N1, et le second message de réponse comprend un premier identifiant temporaire du terminal dans chacun des N2 sous-réseaux ;
et
l'envoi (S405), par le second appareil de communication, d'un premier message de réponse au terminal sur la base du second message de réponse, dans lequel le premier message de réponse indique que le terminal est desservi dans les N2 sous-réseaux, et le premier message de réponse comprend le premier identifiant temporaire du terminal dans chacun des N2 sous-réseaux, dans lequel des premiers identifiants temporaires du terminal dans au moins deux parmi les N2 sous-réseaux sont différents.

8. Procédé selon la revendication 7, dans lequel des informations de configuration d'un j^{ième} sous-réseau dans les N1 sous-réseaux comprennent un ou plusieurs des éléments suivants : un type de service du j^{ième} sous-réseau, un identifiant du j^{ième} sous-réseau, une adresse du j^{ième} sous-réseau, une adresse d'un élément de réseau qui fournit un service au terminal dans le j^{ième} sous-réseau, et un deuxième identifiant temporaire du terminal dans le j^{ième} sous-réseau, dans lequel j est un entier positif allant de 1 à N1.

9. Procédé selon la revendication 8, dans lequel le second message de demande comprend des informations de configuration du second appareil de communication, et les informations de configuration du second appareil de communication comprennent un ou plusieurs des éléments suivants : un identifiant du second appareil de communication, des informations de port du second appareil de communication et un identifiant temporaire du terminal dans le second appareil de communication.

10. Procédé selon l'une quelconque des revendications 7 à 9, dans lequel, avant l'obtention, par un second appareil de communication, d'un second message de réponse, le procédé comprend :
l'obtention, par le second appareil de communication, de secondes informations auprès du premier élément de réseau central, dans lequel les secondes informations indiquent que le terminal est autorisé à être desservi dans les N2 sous-réseaux du réseau central, les secondes informations comprennent des informations de configuration des N2 sous-réseaux, les N2 sous-réseaux comprennent tout ou partie des N1 sous-réseaux, et N2 est un entier positif ; et
la demande, par le second appareil de communication, sur la base d'informations de configuration d'un i^{ième} sous-réseau dans les N2 sous-réseaux, d'un second élément de réseau central associé au i^{ième} sous-réseau pour desservir le terminal dans le i^{ième} sous-réseau.

11. Procédé selon l'une quelconque des revendications 7 à 10, comprenant :
l'obtention, par le second appareil de communication en utilisant une ressource d'interface hertzienne spécifiée, d'informations qui sont relatives à un second sous-réseau et qui sont envoyées par le terminal, dans lequel le second sous-réseau est un sous-réseau auprès duquel le terminal s'enregistre déjà ; et
l'envoi, par le second appareil de communication par le biais d'une première liaison de communication correspondant à la ressource d'interface hertzienne spécifiée, des informations relatives au second sous-réseau à un second élément de réseau central associé au second sous-réseau, dans lequel le second appareil de communication stocke une relation de mise en correspondance entre une pluralité de ressources d'interface hertzienne et une pluralité de premières liaisons de communication.

12. Procédé selon la revendication 11, comprenant :
l'obtention, par le second appareil de communication, d'informations de configuration de chaque ressource d'interface hertzienne dans la pluralité de ressources d'interface hertzienne auprès du réseau central, dans lequel les informations de configuration de la ressource d'interface hertzienne comprennent un ou plusieurs des éléments suivants : des informations de qualité de service, des informations de largeur de bande, des informations de priorité de planification, une ressource temps-fréquence, des informations de port d'antenne et des informations de polarisation.

13. Procédé selon l'une quelconque des revendications 7 à 10, comprenant :
l'obtention, par le second appareil de communication, d'informations qui sont relatives à un second sous-réseau et qui sont envoyées par le terminal, dans lequel les informations comprennent un premier identifiant temporaire du terminal dans le second sous-réseau, et le second sous-réseau est un sous-réseau auprès duquel le terminal s'enregistre déjà ; et
l'envoi, par le second appareil de communication en utilisant un troisième identifiant temporaire correspondant au premier identifiant temporaire, des informations relatives au second sous-réseau à un second élément de réseau central associé au second sous-réseau, dans lequel le troisième identifiant temporaire est un identifiant temporaire du terminal dans le second appareil de communication, et le second appareil de communication stocke une relation de mise en correspondance entre le troisième identifiant temporaire et le premier identifiant temporaire.

14. Appareil de communication, configuré pour mettre en œuvre le procédé selon l'une quelconque des revendications 1 à 13.

15. Produit-programme d'ordinateur, comprenant des instructions, dans lequel, lorsque les instructions sont exécutées sur un ordinateur, l'ordinateur est activé pour réaliser le procédé selon l'une quelconque des revendications 1 à 6, ou le procédé selon l'une quelconque des revendications 7 à 13.
